(19) Europäisches Patentamt
European Patent Office
Office européen des brevets

(11) **EP 4 050 528 A1**

(12) **EUROPEAN PATENT APPLICATION**
published in accordance with Art. 153(4) EPC

(43) Date of publication:
**31.08.2022 Bulletin 2022/35**

(21) Application number: **20892708.7**

(22) Date of filing: **07.10.2020**

(51) International Patent Classification (IPC):
***G06N 20/00*** *(2019.01)*

(52) Cooperative Patent Classification (CPC):
**G06N 20/00**

(86) International application number:
**PCT/CN2020/119859**

(87) International publication number:
**WO 2021/103823 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2019 CN 201911209129**

(71) Applicant: **Huawei Technologies Co., Ltd.
Shenzhen, Guangdong 518129 (CN)**

(72) Inventors:
• **CHANG, Qinglong
Shenzhen, Guangdong 518129 (CN)**
• **ZHANG, Yanfang
Shenzhen, Guangdong 518129 (CN)**
• **SUN, Xudong
Shenzhen, Guangdong 518129 (CN)**
• **XUE, Li
Shenzhen, Guangdong 518129 (CN)**
• **ZHANG, Liang
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **MODEL UPDATE SYSTEM, MODEL UPDATE METHOD, AND RELATED DEVICE**

(57) This application disclose a model update system, which may be applied to the network control field. The system includes a site analysis device (102, 502, 602) and a first analysis device (101, 501, 601). The site analysis device (102, 502, 602) is configured to: receive a first model sent by the first analysis device (101, 501, 601); train the first model by using a first training sample to obtain a second model, where the first training sample includes first feature data of a network device (103, 603) in a site network corresponding to the site analysis device (102, 502, 602); obtain differential data between the first model and the second model; and send the differential data to the first analysis device (101, 501, 601). The first analysis device (101, 501, 601) is configured to: send the first model to the site analysis device (102, 502, 602); receive the differential data sent by the site analysis device (102, 502, 602); and update the first model based on the differential data to obtain a third model. The first analysis device (101, 501, 601) in the system can improve privacy on the basis of updating the first model.

EP 4 050 528 A1

```
┌──────────┐              ┌──────────┐              ┌──────────┐
│  Cloud   │              │          │              │ Network  │
│  device  │              │Site device│             │  device  │
└────┬─────┘              └────┬─────┘              └────┬─────┘
```

┌─ ─ ─ ─ ─ ─ ─ ─ ─ ─ ─ ─ ─ ─ ─ ─┐
│ 301: The cloud device obtains a first │
│    model based on training data       │
└─ ─ ─ ─ ─ ─ ─ ─ ─ ─ ─ ─ ─ ─ ─ ─┘

302: First model →

┌─ ─ ─ ─ ─ ─ ─ ─ ─ ─ ─ ─ ─ ─ ─ ─┐
│ 303: Predict a classification result on to- │
│ be-predicted feature data of the network    │
│      device by using the first model        │
└─ ─ ─ ─ ─ ─ ─ ─ ─ ─ ─ ─ ─ ─ ─ ─┘

← 304: First feature data

← 305: Second feature data

┌─ ─ ─ ─ ─ ─ ─ ─ ─ ─ ─ ─ ─ ─ ─ ─┐
│ 306: Obtain a performance quantitative │
│ indicator of the first model based on the │
│         second feature data               │
└─ ─ ─ ─ ─ ─ ─ ─ ─ ─ ─ ─ ─ ─ ─ ─┘

┌─────────────────────────────────────┐
│ 307: If the performance quantitative indicator of │
│ the first model is less than a target threshold, train │
│ the first model by using a first training sample to │
│ obtain a second model, and obtain differential data │
│ between the second model and the first model │
└─────────────────────────────────────┘

┌─ ─ ─ ─ ─ ─ ─ ─ ─ ─ ─ ─ ─ ─ ─ ─┐
│ 308: Predict the classification result on the │
│ to-be-predicted feature data of the network   │
│      device by using the second model         │
└─ ─ ─ ─ ─ ─ ─ ─ ─ ─ ─ ─ ─ ─ ─ ─┘

← 309: Differential data

┌─────────────────────────────────────┐
│ 310: Update the first model based on the │
│  differential data to obtain a third model │
└─────────────────────────────────────┘

311: Third model →

┌─ ─ ─ ─ ─ ─ ─ ─ ─ ─ ─ ─ ─ ─ ─ ─┐
│ 312: Predict the classification result on the │
│ to-be-predicted feature data of the network   │
│      device by using the third model          │
└─ ─ ─ ─ ─ ─ ─ ─ ─ ─ ─ ─ ─ ─ ─ ─┘

FIG. 3

**Description**

This application claims priority to Chinese Patent Application No. 201911209129.2, filed on November 30, 2019 and entitled "MODEL UPDATE SYSTEM, MODEL UPDATE METHOD, AND RELATED DEVICE", which is incorporated herein by reference in its entirety.

**TECHNICAL FIELD**

Embodiments of this application relate to the network control field, and in particular, to a model update system, a model update method, and a related device.

**BACKGROUND**

With rapid development of artificial intelligence (artificial intelligence, AI), an AI model is widely used in a network by virtue of features such as flexibility and intelligence.

After a network device configures an AI model, the network device uses feature data on the network device as an input of the AI model. The feature data on the network device is determined by a traffic scenario of the network device, and different feature data is generated in different traffic scenarios. After the network device inputs the feature data into the AI model, the network device may obtain an output result based on the AI model. The network device may make a corresponding decision based on the output result, or send the output result to another network device, to help the another network device make a corresponding decision based on the output result.

Because the AI model is obtained through training based on training data, when the scenario of the network device is different from a collection scenario of the training data, or when the scenario of the network device is originally the same as a collection scenario of the training data, but the scenario of the network device is now different from the collection scenario of the training data because the scenario of the network device changes, performance of the AI model may deteriorate. Therefore, how to maintain the performance of the AI model is an urgent problem to be resolved.

**SUMMARY**

Embodiments of this application provide a model update system, a model update method, and a related device, to improve privacy on the basis of updating a first model.

A first aspect of the embodiments of this application provides a model update system, including:

a site analysis device and a first analysis device. The first analysis device may obtain a first model, and after obtaining the first model, the first analysis device may send the first model to the site analysis device. The site analysis device may obtain first feature data sent by a network device. After receiving the first model, the site analysis device may train the first model by using a first training sample to obtain a second model, where the first training sample includes the first feature data. After obtaining the second model, the site analysis device may obtain differential data between the first model and the second model. After the site analysis device obtains the differential data, the site analysis device sends the differential data to the first analysis device. The first analysis device may receive the differential data, and update the first model based on the differential data to obtain a third model.

In this embodiment of this application, the site analysis device may train the first model by using the first training sample to obtain the second model. The site analysis device may obtain the differential data between the first model and the second model, and send the differential data to the first analysis device, to request the first analysis device to update the first model based on the differential data, where the differential data is obtained by the site analysis device based on the first model and the second model, and the second model is obtained by the site analysis device by training the first model by using the first training sample. The first training sample includes the first feature data of the network device, and privacy of the differential data is higher than that of the first feature data. Therefore, privacy is improved on the basis that the first analysis device updates the first model to maintain model performance.

In a possible design, in a first implementation of the first aspect of the embodiments of this application, the site analysis device is further configured to determine whether the first model is degraded. Only when the site analysis device determines that the first model is degraded, the site analysis device trains the first model by using the first training sample to obtain the second model.

In this embodiment of this application, only when the site analysis device determines that the first model is degraded, the site analysis device trains the first model by using the first training sample to obtain the second model. When the site analysis device determines that the first model is degraded, it indicates that performance of the first model deteriorates. Therefore, only when the performance of the first model deteriorates, the site analysis device trains the first model by using the first training sample, to avoid a case in which the site analysis device trains the first model by using the first training sample when the performance of the first model does not deteriorate, thereby saving network resources of the site analysis device.

In a possible design, in a second implementation of the first aspect of the embodiments of this application, the system includes N site analysis devices. In this case, the first analysis device may be connected to the N site analysis devices, where N is an integer greater than 1. After the first analysis device obtains the first model, the first analysis device is specifically configured to: send the first model to the N site analysis devices; receive a plurality of pieces of differential data sent by L site analysis devices, where L is an integer greater than 1 and less than or equal to N; and update the first model based on the plurality of pieces of differential data to obtain the third model.

In this embodiment of this application, the first analysis device may be connected to the N site analysis devices. Because N is an integer greater than 1, the first analysis device may be connected to a plurality of site analysis devices. On the basis, the first analysis device may receive the plurality of pieces of differential data sent by the L site analysis devices, where L is an integer greater than 1 and less than or equal to N. Because L is greater than 1, the first analysis device may receive a plurality of pieces of differential data sent by the plurality of site analysis devices, and update the first model based on the plurality of pieces of differential data. Because the first analysis device may receive the plurality of pieces of differential data sent by the plurality of site analysis devices, and update the first model based on the plurality of pieces of differential data, a case in which when there are a plurality of site analysis devices, the first analysis device uses only differential data of a site analysis device, and consequently the third model obtained by the first analysis device based on the differential data does not match another site analysis device is avoided. To be specific, performance of the third model on another site analysis device is poorer than performance of the first model on the another site analysis device.

In a possible design, in a third implementation of the first aspect of the embodiments of this application, the site analysis device does not send the second model to the first analysis device.

In this embodiment of this application, the site analysis device does not send the second model to the first analysis device. Because the first analysis device also stores the first model, the site analysis device only needs to send the differential data between the first model and the second model. The first analysis device may update the first model based on the differential data to obtain the third model. Because a data volume of the differential data is less than a data volume of the second model, network transmission resources can be saved.

In a possible design, in a fourth implementation of the first aspect of the embodiments of this application, the first analysis device is further configured to: collect statistics about the quantity L of site analysis devices that send the differential data to the first analysis device; and update the first model based on the differential data to obtain the third model if a ratio of L to N reaches a threshold K, where K is greater than 0 and less than or equal to 1.

In this embodiment of this application, the first analysis device may collect statistics about the quantity L of site analysis devices that send the differential data to the first analysis device. Only when the ratio of L to N reaches the threshold K, the first analysis device updates the first model based on the differential data to obtain the third model. Only when a specified quantity of site analysis devices send the differential data to the first analysis device, the first analysis device updates the first model based on the differential data to obtain the third model. Therefore, the first analysis device may flexibly adjust, by setting the threshold K, a frequency at which the first analysis device updates the first model.

In a possible design, in a fifth implementation of the first aspect of the embodiments of this application, the system further includes the network device. The network device is configured to: receive an updated model sent by the site analysis device, where the updated model includes the second model or the third model; and output an inference result based on to-be-predicted feature data of the network device by using the updated model. The site analysis device is further configured to send the updated model to the network device.

In this embodiment of this application, the updated model includes the second model or the third model. That the second model or the third model is configured on the network device is limited. The network device may directly collect the to-be-predicted feature data on the network device. Therefore, network resources can be saved.

In a possible design, in a sixth implementation of the first aspect of the embodiments of this application, the network device is configured to send to-be-predicted feature data of the network device to the site analysis device. The site analysis device is further configured to output an inference result based on the to-be-predicted feature data of the network device by using an updated model.

In this embodiment of this application, the updated model includes the second model or the third model. That the second model or the third model is configured on the site analysis device is limited. The site analysis device obtains the to-be-predicted feature data sent by the network device, and the site analysis device outputs the inference result based on the to-be-predicted feature data of the network device by using the updated model. Therefore, remote prediction can be implemented, and prediction does not need to be performed locally on the network device, thereby reducing a possibility that the inference result is leaked on the network device.

In a possible design, in a seventh implementation of the first aspect of the embodiments of this application, the network device is specifically configured to predict a classification result based on the to-be-predicted feature data of the network device by using the updated model.

In this embodiment of this application, the updated model includes the second model or the third model. A function of the second model or the third model is limited to perform classification prediction. Therefore, implementability of the solution is improved.

In a possible design, in an eighth implementation of the first aspect of the embodiments of this application, the site analysis device is specifically configured to predict a classification result based on the to-be-predicted feature data of the network device by using the updated model.

In this embodiment of this application, the updated model includes the second model or the third model.

A function of the second model or the third model is limited to perform classification prediction. Therefore, implementability of the solution is improved.

In a possible design, in a ninth implementation of the first aspect of the embodiments of this application, the to-be-predicted feature data includes KPI feature data, and the KPI feature data is feature data of a KPI time series or KPI data.

In this embodiment of this application, that the KPI feature data is the feature data of the KPI time series or the KPI data is limited, so as to improve implementability of the solution.

In a possible design, in a tenth implementation of the first aspect of the embodiments of this application, the differential data is gradient information.

In this embodiment of this application, the gradient information is a concept of a neural network model. Therefore, types of the first model, the second model, and the third model are limited to belong to the neural network model. Therefore, implementability of the solution is improved.

A second aspect of the embodiments of this application provides a model update method, including:

A site analysis device may receive a first model sent by a first analysis device. After the site analysis device receives the first model, the site analysis device may train the first model by using a first training sample to obtain a second model, where the first training sample includes first feature data of a network device in a site network corresponding to the site analysis device. After the site analysis device obtains the second model, the site analysis device may obtain differential data between the first model and the second model. The site analysis device may send the differential data to the first analysis device, to request the first analysis device to update the first model based on the differential data to obtain a third model.

In this embodiment of this application, the site analysis device may receive the first model sent by the first analysis device, and train the first model by using the first training sample to obtain the second model. After obtaining the second model, the site analysis device may obtain the differential data between the first model and the second model, and send the differential data to the first analysis device, to request the first analysis device to update the first model based on the differential data, where the differential data is obtained by the site analysis device based on the first model and the second model, and the second model is obtained by the site analysis device by training the first model by using the first training sample. The first training sample includes the first feature data of the network device, and privacy of the differential data is higher than that of the first feature data. Therefore, privacy is improved on the basis that the first analysis device updates the first model to maintain model performance.

In a possible design, in a first implementation of the second aspect of the embodiments of this application, the site analysis device determines whether the first model is degraded. The site analysis device trains the first model by using the first training sample to obtain the second model if the site analysis device determines that the first model is degraded.

In this embodiment of this application, only when the site analysis device determines that the first model is degraded, the site analysis device trains the first model by using the first training sample to obtain the second model. When the site analysis device determines that the first model is degraded, it indicates that performance of the first model deteriorates. Therefore, only when the performance of the first model deteriorates, the site analysis device trains the first model by using the first training sample, to avoid a case in which the site analysis device trains the first model by using the first training sample when the performance of the first model does not deteriorate, thereby saving network resources of the site analysis device.

In a possible design, in a second implementation of the second aspect of the embodiments of this application, the site analysis device may obtain a performance quantitative indicator of the first model. The site analysis device determines whether the performance quantitative indicator of the first model is less than a target threshold. The site analysis device determines that the first model is degraded if the performance quantitative indicator of the first model is less than the target threshold.

In this embodiment of this application, if the performance quantitative indicator of the first model is less than the target threshold, the site analysis device determines that the first model is degraded. The site analysis device is limited to determine, in a manner of obtaining the performance quantitative indicator of the first model, whether the first model is degraded, and implementability of the solution is improved.

In a possible design, in a third implementation of the second aspect of the embodiments of this application, the site analysis device may obtain second feature data of the network device. The site analysis device may obtain a first inference result obtained by the first model based on the second feature data. The site analysis device may obtain an accuracy rate of the first model based on the first inference result and a preset label of the second feature data, and use the accuracy rate as the performance quantitative indicator of the first model; or the site analysis device may obtain a recall rate of the first model based on the first inference result and a preset label of the second feature data, and use the recall rate as the performance quantitative indicator of the first model.

In this embodiment of this application, the site analysis device obtains the accuracy rate of the first model based on the first inference result and the preset label of the second feature data, and the site analysis device uses the accuracy rate as the performance quantitative indicator of the first model, where the first inference result is obtained by the first model based on the second feature data; or the site analysis device obtains the recall rate of the first model based on the first inference result and the preset label of the second feature data, and the site analysis device uses the recall rate as the performance quantitative indicator of the first model, where the first inference result is obtained by the first model based on the second feature data. Both the first inference result and the preset label of the second feature data are related to the second feature data, the second feature data is from the network device, and the first model is configured to output an inference result based on to-be-predicted feature data of the network device. Therefore, determining the performance quantitative indicator of the first model based on the second feature data has higher accuracy than determining the performance quantitative indicator of the first model based on feature data on another device.

In a possible design, in a fourth implementation of the second aspect of the embodiments of this application, the site analysis device sends a first data request to the network device, to request the network device to send a second training sample to the site analysis device, where the second training sample includes the second feature data and the first inference result, and the first inference result is obtained by the first model based on the second feature data.

In this embodiment of this application, sources of the second feature data and the first inference result are limited, and implementability of the solution is improved.

In a possible design, in a fifth implementation of the second aspect of the embodiments of this application, the site analysis device sends an updated model to the network device, where the updated model includes the second model or the third model, and is configured to output an inference result based on to-be-predicted feature data of the network device.

In this embodiment of this application, the updated model includes the second model or the third model. That the second model or the third model is configured on the network device is limited. The network device may directly collect the to-be-predicted feature data on the network device. Therefore, network resources can be saved.

In a possible design, in a sixth implementation of the second aspect of the embodiments of this application, the site analysis device sends an updated model to the network device, where the updated model includes the second model or the third model, and is configured to predict a classification result based on to-be-predicted feature data of the network device, and the to-be-predicted feature data includes key performance indicator KPI feature data.

In this embodiment of this application, the updated model includes the second model or the third model. A function of the second model or the third model is limited to perform classification prediction, and the to-be-predicted feature data includes the KPI feature data. Therefore, implementability of the solution is improved.

In a possible design, in a seventh implementation of the second aspect of the embodiments of this application, the site analysis device receives to-be-predicted feature data of the network device. The site analysis device outputs an inference result based on the to-be-predicted feature data of the network device by using an updated model, where the updated model includes the second model or the third model.

In this embodiment of this application, the updated model includes the second model or the third model. That the second model or the third model is configured on the site analysis device is limited. The site analysis device obtains the to-be-predicted feature data sent by the network device, and the site analysis device outputs the inference result based on the to-be-predicted feature data of the network device by using the updated model. Therefore, remote prediction can be implemented, and prediction does not need to be performed locally on the network device, thereby reducing a possibility that the inference result is leaked on the network device.

In a possible design, in an eighth implementation of the second aspect of the embodiments of this application, the to-be-predicted feature data includes KPI feature data, and the site analysis device predicts a classification result based on the to-be-predicted feature data of the network device by using the updated model.

In this embodiment of this application, the updated model includes the second model or the third model. A function of the second model or the third model is limited to perform classification prediction, and the to-be-predicted feature data includes the KPI feature data. Therefore, implementability of the solution is improved.

In a possible design, in a ninth implementation of the second aspect of the embodiments of this application, the KPI feature data is feature data of a KPI time series or KPI data.

In this embodiment of this application, that the KPI feature data is the feature data of the KPI time series or the KPI data is limited, so as to improve implementability of the solution.

In a possible design, in a tenth implementation of the second aspect of the embodiments of this application, the site analysis device tests the second model by using test data, where the test data includes a ground truth label. The site analysis device stores degraded data, to enable the site analysis device to update a model in the site analysis device by using the degraded data, where the degraded data belongs to test data, an inference label of the degraded data is not equal to the ground truth label, and the inference label is obtained by the site analysis device by testing the second model by using the test data.

In this embodiment of this application, after the site analysis device trains the first model by using the first training sample to obtain the second model, the site analysis device may test the second model by using the test data, and store the degraded data, to enable the site analysis device to update the model in the site analysis device by using the degraded data, where the degraded data is used to enable the site analysis device to update the model in the site analysis device by using the degraded data. Therefore, after the site analysis device stores the degraded data, when the site analysis device needs to update the model, the site analysis device may update the model by using the degraded data. Because the degraded data belongs to data that is not well learned in the second model, the site analysis device stores the data for future model update, so that a subsequent model can re-learn data that is not well learned, thereby improving performance of the subsequent model.

In a possible design, in an eleventh implementation of the second aspect of the embodiments of this application, the differential data is gradient information.

In this embodiment of this application, the gradient information is a concept of a neural network model. Therefore, types of the first model, the second model, and the third model are limited to belong to the neural network model. Therefore, implementability of the solution is improved.

In a possible design, in a twelfth implementation of the second aspect of the embodiments of this application, the site analysis device does not send the second model to the first analysis device.

In this embodiment of this application, the site analysis device does not send the second model to the first analysis device. Because the first analysis device also stores the first model, the site analysis device only needs to send the differential data between the first model and the second model. The first analysis device may update the first model based on the differential data to obtain the third model. Because a data volume of the differential data is less than a data volume of the second model, network transmission resources can be saved.

A third aspect of the embodiments of this application provides a model update method, including:

A first analysis device sends a first model to a site analysis device, where the first model is configured to output an inference result based on to-be-predicted feature data of a network device. The first analysis device receives differential data between the first model and a second model, where the second model is obtained by the site analysis device by training the first model by using a first training sample, and the first training sample includes first feature data of the network device in a site network corresponding to the site analysis device. The first analysis device updates the first model based on the differential data to obtain a third model.

In this embodiment of this application, the first analysis device may send the first model to the site analysis device. The first analysis device receives the differential data between the first model and the second model, and updates the first model based on the differential data to obtain the third model. The differential data is obtained by the site analysis device based on the first model and the second model, and the second model is obtained by the site analysis device by training the first model by using the first training sample. The first training sample includes the first feature data of the network device, and privacy of the differential data is higher than that of the first feature data. Therefore, privacy is improved on the basis that the first analysis device updates the first model to maintain model performance.

In a possible design, in a first implementation of the third aspect of the embodiments of this application, the first analysis device may send the first model to N site analysis devices, where N is an integer greater than 1. The first analysis device may receive a plurality of pieces of differential data sent by L site analysis devices, where L is an integer greater than 1 and less than or equal to N. The first analysis device updates the first model based on the plurality of pieces of differential data to obtain the third model. The first analysis device sends the third model to the N site analysis devices.

In this embodiment of this application, the first analysis device may send the first model to the N site analysis devices. Because N is an integer greater than 1, the first analysis device may be connected to a plurality of site analysis devices. On the basis, the first analysis device may receive the plurality of pieces of differential data sent by the L site analysis devices, where L is an integer greater than 1 and less than or equal to N. Because L is greater than 1, the first analysis device may receive a plurality of pieces of differential data sent by the plurality of site analysis devices, and update the first model based on the plurality of pieces of differential data. Because the first analysis device may receive the plurality of pieces of differential data sent by the plurality of site analysis devices, and update the first model based on the plurality of pieces of differential data, a case in which when there are a plurality of site analysis devices, the first analysis device uses only differential data of a site analysis device, and consequently the third model obtained by the first analysis device based on the differential data does not match another site analysis device is avoided. To be specific, performance of the third model on another site analysis device is poorer than performance of the first model on the another site analysis device.

In a possible design, in a second implementation of the third aspect of the embodiments of this application, the first analysis device may obtain an average value of the plurality of pieces of differential data. The first analysis device updates the first model by using the average value of the plurality of pieces of differential data to obtain the third model.

In this embodiment of this application, the first analysis device updates the first model by using the average value of the plurality of pieces of differential data. A manner in which the first analysis device uses the plurality of pieces of differential data is limited, and implementability of the solution is improved.

In a possible design, in a third implementation of the third aspect of the embodiments of this application, the first analysis device may obtain a weighted average value of the plurality of pieces of differential data. The first analysis device updates the first model by using the weighted average value to obtain the third model.

In this embodiment of this application, the first analysis device updates the first model by using the weighted average value. The first analysis device obtains the weighted average value of the plurality of pieces of differential data. Therefore, the first analysis device may set different weighting coefficients based on different differential data, thereby improving flexibility of the solution.

In a possible design, in a fourth implementation of the third aspect of the embodiments of this application, the first analysis device may collect statistics about the quantity L of site analysis devices that send the differential data to the first analysis device. The first analysis device updates the first model based on the differential data to obtain the third model if a ratio of L to N reaches a threshold K, where K is greater than 0 and less than or equal to 1, and N is the quantity of site analysis devices that receive the first model sent by the first analysis device.

In this embodiment of this application, the first analysis device may collect statistics about the quantity L of site analysis devices that send the differential data to the first analysis device. Only when the ratio of L to N reaches the threshold K, the first analysis device updates the first model based on the differential data to obtain the third model. Only when a specified quantity of site analysis devices send the differential data to the first analysis device, the first analysis device updates the first model based on the differential data to obtain the third model. Therefore, the first analysis device may flexibly adjust, by setting the threshold K, a frequency at which the first analysis device updates the first model.

In a possible design, in a fifth implementation of the third aspect of the embodiments of this application, the differential data is gradient information.

In this embodiment of this application, the gradient information is a concept of a neural network model. Therefore, types of the first model, the second model, and the third model are limited to belong to the neural network model. Therefore, implementability of the solution is improved.

In a possible design, in a sixth implementation of the third aspect of the embodiments of this application, the first analysis device does not receive the second model sent by the site analysis device.

In this embodiment of this application, the first analysis device does not receive the second model sent by the site analysis device. Because the first analysis device also stores the first model, the first analysis device only needs to receive the differential data between the first model and the second model. The first analysis device may update the first model based on the differential data to obtain the third model. Because a data volume of the differential data is less than a data volume of the second model, network transmission resources can be saved.

A fourth aspect of the embodiments of this application provides a model update apparatus, including:

a receiving unit, configured to receive a first model sent by a first analysis device;
a training unit, configured to train the first model by using a first training sample to obtain a second model, where the first training sample includes first feature data of a network device in a site network corresponding to a site analysis device;
an obtaining unit, configured to obtain differential data between the first model and the second model; and
a sending unit, configured to send the differential data to the first analysis device, to request the first analysis device to update the first model based on the differential data to obtain a third model.

In a possible design, the apparatus further includes:
a determining unit, configured to determine whether the first model is degraded, where the training unit trains the first model by using the first training sample to obtain the second model if the determining unit determines that the first model is degraded.

In a possible design, the obtaining unit is further configured to obtain a performance quantitative indicator of the first model;

the determining unit is further configured to determine whether the performance quantitative indicator of the first model is less than a target threshold; and
the determining unit is specifically configured to determine that the first model is degraded if the performance quantitative indicator of the first model is less than the target threshold.

In a possible design, the obtaining unit is further configured to obtain second feature data of the network device;

the obtaining unit is further configured to obtain a first inference result obtained by the first model based on the second feature data; and

the obtaining unit is specifically configured to: obtain an accuracy rate of the first model based on the first inference result and a preset label of the second feature data, and use the accuracy rate as the performance quantitative indicator of the first model; or the obtaining unit is specifically configured to: obtain a recall rate of the first model based on the first inference result and a preset label of the second feature data, and use the recall rate as the performance quantitative indicator of the first model.

In a possible design, the sending unit is further configured to send a first data request to the network device, to request the network device to send a second training sample to the site analysis device, where the second training sample includes the second feature data and the first inference result, and the first inference result is obtained by the first model based on the second feature data.

In a possible design, the sending unit is further configured to send an updated model to the network device, where the updated model includes the second model or the third model, and is configured to output an inference result based on to-be-predicted feature data of the network device.

In a possible design, the sending unit is further configured to send an updated model to the network device, where the updated model includes the second model or the third model, and is configured to predict a classification result based on to-be-predicted feature data of the network device, and the to-be-predicted feature data includes key performance indicator KPI feature data.

In a possible design, the receiving unit is further configured to receive the to-be-predicted feature data of the network device; and

the apparatus further includes:

an inference unit, configured to output an inference result based on the to-be-predicted feature data of the network device by using an updated model, where the updated model includes the second model or the third model.

In a possible design, the to-be-predicted feature data includes KPI feature data, and

the inference unit is specifically configured to: predict, by the site analysis device, a classification result based on the to-be-predicted feature data of the network device by using the updated model.

In a possible design, the KPI feature data is feature data of a KPI time series or KPI data.

In a possible design, the apparatus further includes:

a test unit, configured to test the second model by using test data, where the test data includes a ground truth label; and

a storage unit, configured to store degraded data, to enable the site analysis device to update a model in the site analysis device by using the degraded data, where the degraded data belongs to the test data, an inference label of the degraded data is not equal to the ground truth label, and the inference label is obtained by the site analysis device by testing the second model by using the test data.

A fifth aspect of the embodiments of this application provides a model update apparatus, including:

a sending unit, configured to send a first model to a site analysis device, where the first model is configured to output an inference result based on to-be-predicted feature data of a network device;

a receiving unit, configured to receive differential data between the first model and a second model, where the second model is obtained by the site analysis device by training the first model by using a first training sample, and the first training sample includes first feature data of the network device in a site network corresponding to the site analysis device; and

an update unit, configured to update the first model based on the differential data to obtain a third model.

In a possible design, the sending unit is specifically configured to send the first model to N site analysis devices, where N is an integer greater than 1;

the receiving unit is specifically configured to receive a plurality of pieces of differential data sent by L site analysis devices, where L is an integer greater than 1 and less than or equal to N;

the update unit is specifically configured to update the first model based on the plurality of pieces of differential data to obtain the third model; and

the sending unit is further configured to send the third model to the N site analysis devices.

In a possible design, the apparatus further includes:

an obtaining unit, configured to obtain an average value of the plurality of pieces of differential data, where the update unit is specifically configured to update the first model by using the average value of plurality of pieces of differential data to obtain the third model.

In a possible design, the apparatus further includes:

an obtaining unit, configured to obtain a weighted average value of the plurality of pieces of differential data, where the update unit is specifically configured to update the first model by using the weighted average value to obtain the third model.

In a possible design, the apparatus further includes:

a statistics collection unit, configured to collect statistics about the quantity L of site analysis devices that send the differential data to the first analysis device, where the update unit is specifically configured to update the first model based on the differential data to obtain the third model if a ratio of L to N reaches a threshold K, where K is greater than 0 and less than or equal to 1.

A sixth aspect of the embodiments of this application provides a model update device, including:

a memory and a processor, where
the memory is configured to store a program; and
the processor is configured to execute a program in the memory, including performing the method according to any one of the second aspect or the implementations of the second aspect, or performing the method according to any one of the third aspect or the implementations of the third aspect.

A seventh aspect of the embodiments of this application provides a computer storage medium, where the computer storage medium stores instructions, and when the instructions are executed on a computer, the computer is enabled to perform the method according to any one of the second aspect or the implementations of the second aspect, or perform the method according to any one of the third aspect or the implementations of the third aspect.

An eighth aspect of the embodiments of this application provides a computer program product, where when the computer program product is executed on a computer, and when instructions are executed on the computer, the computer is enabled to perform the method according to any one of the second aspect or the implementations of the second aspect, or perform the method according to any one of the third aspect or the implementations of the third aspect.

## BRIEF DESCRIPTION OF DRAWINGS

FIG. 1 is a schematic diagram of an application scenario according to an embodiment of this application;
FIG. 2 is a schematic diagram of another application scenario according to an embodiment of this application;
FIG. 3 is a schematic flowchart of a model update method according to an embodiment of this application;
FIG. 4A and FIG. 4B are another schematic flowchart of a model update method according to an embodiment of this application;
FIG. 5 is a schematic diagram of a structure of a model update system according to an embodiment of this application;
FIG. 6 is another schematic diagram of a structure of a model update system according to an embodiment of this application;
FIG. 7 is a schematic diagram of a structure of a model update apparatus according to an embodiment of this application;
FIG. 8 is another schematic diagram of a structure of a model update apparatus according to an embodiment of this application;
FIG. 9 is another schematic diagram of a structure of a model update apparatus according to an embodiment of this application;
FIG. 10 is another schematic diagram of a structure of a model update apparatus according to an embodiment of this application;
FIG. 11 is a schematic diagram of a structure of a model update device according to an embodiment of this application; and
FIG. 12 is another schematic diagram of a structure of a model update device according to an embodiment of this application.

## DESCRIPTION OF EMBODIMENTS

Embodiments of this application provide a model update system, a model update method, and a related device, which are applied to the network control field, to improve privacy on the basis of updating a first model.

For ease of understanding of a reader, the embodiments of this application briefly describe a machine learning algorithm in the provided model update method.

As an important branch of the AI field, machine learning algorithms are widely used in many fields. From the perspective of learning methods, the machine learning algorithm can be classified into several types: a supervised learning algorithm, an unsupervised learning algorithm, a semi-supervised learning algorithm, and a reinforcement learning algorithm. The supervised learning algorithm refers to learning an algorithm or establishing a mode based on training data, and inferring a new instance based on the algorithm or the mode. The training data, also referred to as a training sample, includes input data and an expected output. A model of the machine learning algorithm is also referred to as a machine learning model, and an expected output, referred to as a label, of the model may be a predicted classification result (referred to as a classification label). The difference between the unsupervised learning algorithm and the supervised learning algorithm is that a training sample of the unsupervised learning algorithm does not have a given label. The model of the machine learning algorithm obtains a specific result by analyzing the training sample. In the semi-supervised learning algorithm, some of training sample have labels and the rest training samples do not have labels. However, data that does not have a label is much more than data that has a label. The reinforcement learning algorithm constantly experiments with a policy in the environment to maximize expected benefits, and makes, by using rewards or punishment given by the environment, a choice that can obtain maximum benefits.

It should be noted that each training sample includes one-dimensional or multi-dimensional feature data, that is, includes feature data of one or more features. For example, in a scenario of predicting a classification result on key performance indicator (key performance indicator, KPI) data, the feature data may be specifically KPI feature data. The KPI feature data refers to feature data generated based on the KPI data, and the KPI feature data may be feature data of a KPI time series, that is, data obtained by extracting a feature of the KPI time series. The KPI feature data may also directly be KPI data. A KPI may be specifically a network KPI, and network KPIs may include KPIs of various categories, such as central processing unit (central processing unit, CPU) utilization, optical power, network traffic, a packet loss rate, a delay, and/or a quantity of accessed users. When the KPI feature data is the feature data of the KPI time series, the KPI feature data may be specifically feature data extracted from a time series of KPI data of any one of the foregoing KPI categories. For example, one training sample includes network KPI feature data with two features in total: a maximum value and a weighted average value of a corresponding network KPI time series. When the KPI feature data is the KPI data, the KPI feature data may be specifically KPI data of any one of the foregoing KPI categories. For example, one training sample includes network KPI feature data with three features in total: CPU utilization, a packet loss rate, and a delay. Further, in a scenario to which the supervised learning algorithm or the semi-supervised learning algorithm is applied, the training sample may further include a label. For example, in the foregoing scenario of predicting the classification result on the KPI data, assuming that the classification result is used to indicate whether a data sequence is abnormal, one training sample further includes a label: "abnormal" or "normal".

It should be noted that the foregoing time series is a special data series, and the time series is a set of a group of data arranged according to a time series. The time series is usually a data generation sequence, and data in the time series is also referred to as a data point. Usually, a time interval of every two data points in one time series is a constant value, and therefore the time series can be used as discrete time data, to be analyzed and processed.

Current training manners of the machine learning algorithm are classified into an offline learning (online learning) manner and an online learning (online learning) manner.

In the offline learning (also referred to as offline training) manner, samples in a training sample set need to be input into a machine learning model in batches to perform model training, and a relatively large data volume is required for training. Offline learning is usually used to train a large or complex model. Therefore, a training process is usually time-consuming, and a large data volume needs to be processed.

In the online learning (also referred to as online training) manner, model training needs to be performed by using samples in a training sample set in a small batch or one by one, and a small data volume is required for training. Online learning is usually applied to a scenario that has a high requirement on real time. An incremental learning (also referred to as incremental training) manner is a special online learning manner, which requires a model not only to have a capability of learning a new mode in real time, but also to have an anti-forgetting capability, that is, requires the model to not only remember a historically learned mode, but also to learn a new mode.

In a practical task of machine learning, representative samples need to be selected to construct the machine learning model. Usually, in sample data having a label, a sample with strong correlation with a category is selected as the sample set. The label is used to identify the sample data, for example, identify a category of the sample data. In the embodiments of this application, all data used for machine learning model training is sample data. In the following, the training data is referred to as a training sample, the training sample set is referred to as a training sample set, and the sample data is referred to as a sample for short in some content.

The machine learning model is configured to infer input feature data to obtain an inference result. The machine learning model may be a classification prediction model, configured to infer classification of the input feature data. For example, the machine learning model may be an anomaly detection model, configured to detect whether the feature data is abnormal. The machine learning model may alternatively be a numerical prediction model, configured to obtain a specific value through inference based on input feature data. For example, the machine learning model may be a traffic prediction model, configured to predict a future traffic volume based on input feature data of current traffic. Usually, the classification prediction model may alternatively be referred to as a classification model for short and the numerical prediction model may be referred to as a prediction model for short.

The following describes technical solutions in the embodiments of this application with reference to the accompanying drawings.

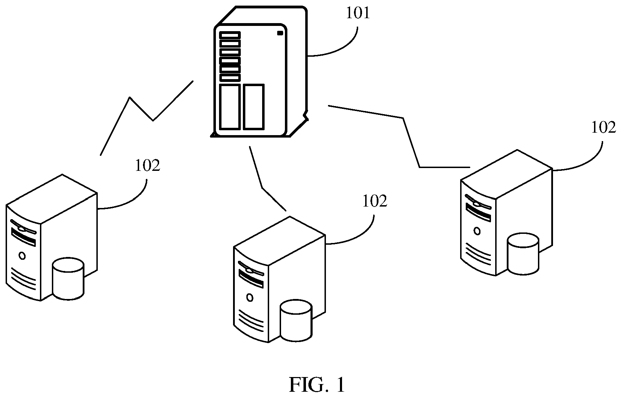

FIG. 1 is a schematic diagram of an application scenario of a model update method according to an embodiment of this application. As shown in FIG. 1, the application scenario includes a plurality of analysis devices, and the plurality of analysis devices include a first analysis device 101 and a site analysis device 102. Each analysis device is configured to perform a series of data analysis processes such as data mining and/or data modeling. A quantity of first analysis devices 101 and a quantity of site analysis devices 102 in FIG. 1 are merely used as an example, and are not intended to limit the application scenario of the model update method according to this embodiment of this application.

The first analysis device 101 may be specifically a cloud analysis device (referred to as a cloud device for short below). The cloud analysis device may be a computer, a server, a server cluster including several servers, or a cloud computing service center, and is deployed at a back end of a service network. The site analysis device 102, referred to as a site device for short, may be a server, a server cluster including several servers, or a cloud computing service center. In the application scenario, a model update system related to the model update method includes a plurality of site devices, that is, includes a plurality of site networks. The site network may be a core network or an edge network. A user in each site network may be a carrier or an enterprise customer. Different site networks may be different networks divided based on corresponding dimensions, for example, may be networks in different regions, networks of different carriers, different service networks, and different network domains. A plurality of site analysis devices 102 may be in a one-to-one correspondence with the plurality of site networks. Each site analysis device 102 is configured to provide a data analysis service for a corresponding site network, and the site analysis device 102 may be located in the corresponding site network or may be located outside the corresponding site network. Each site analysis device 102 is connected to the first analysis device 101 by using a wired network or a wireless network. A communication network in this embodiment of this application is a 2nd generation (2-Generation, 2G) communication network, a 3rd generation (3rd Generation, 3G) communication network, a Long Term Evolution (Long Term Evolution, LTE) communication network, a 5th generation (5rd Generation, 5G) communication network, or the like.

A main function of the site analysis device 102 is to receive a first model sent by the first analysis device 101, train the first model (for example, perform incremental training on the first model) by using a first training sample to obtain a second model, where the first training sample includes first feature data of a network device in a site network corresponding to the site analysis device, obtain differential data between the first model and the second model, and send the differential data to the first analysis device. The differential data may be specifically a matrix including difference values of a plurality of parameters. For example, the first model includes four parameters, and a matrix including values of the four parameters is [al, b1, c1, d1]. The second model also includes the four parameters. If a matrix including the values is [a2, b2, c2, d2], a matrix including difference values of the four parameters is [a2-a1, b2-b1, c2-c1, d2-d1].

A main function of the first analysis device 101 is to obtain the first model through training based on collected training data, where the first model is a machine learning model (the foregoing offline learning manner is used in this process), and then deploy the first model in each site analysis device 102. The site analysis device 102 performs incremental training (the foregoing online learning manner is used in this process). The first analysis device 101 collects the differential data sent by the site analysis device 102, and provides a model update service for the site analysis device 102. The first analysis device 101 updates the first model based on the differential data to obtain a third model, and sends the third model to the site analysis device 102. Based on different training samples, different machine learning models may be obtained through training, and different machine learning models may implement different functions. For example, functions such as anomaly detection, prediction, network security protection, and application identification or user experience evaluation (that is, evaluation on user experience) may be implemented.

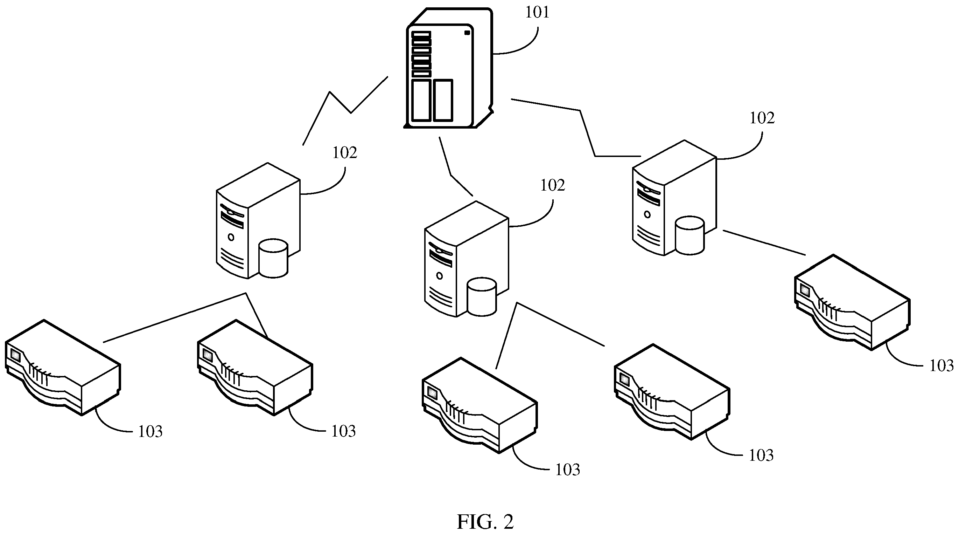

Further, FIG. 2 is a schematic diagram of another application scenario of a model update method according to an embodiment of this application. Based on FIG. 1, the application scenario further includes a network device 103. Each site analysis device 102 may manage a network device 103 in a network (also referred to as a site network). The network device 103 may be a router, a switch, a base station, or the like. The network device 103 is connected to the site analysis device 102 by using a wired network or a wireless network. The network device 103 is configured to upload collected feature data, for example, KPIs, of various categories, of a time series, to the analysis device 102, and the site analysis device 102 is configured to extract and use the feature data from the network device 103, for example, determine a label of the obtained time series. Optionally, the data uploaded by the network device 103 to the analysis device 102 may further include various types of log data, device status data, and the like.

Further, the model update method according to this embodiment of this application may be used in an anomaly detection scenario. Anomaly detection is to detect a mode that does not meet an expectation. A data source of the anomaly detection includes an application, a process, an operating system, a device, or a network. For example, an object of the anomaly detection may be the foregoing KPI data series. When the model update method according to this embodiment of this application is applied to the anomaly detection scenario, the site analysis device 102 may be a network analyzer, a machine learning model maintained by the site analysis device 102 is an anomaly detection model, and a determined label is an anomaly detection label. The anomaly detection label includes two classification labels: "normal" and "abnormal".

In the anomaly detection scenario, the foregoing machine learning model may be a model based on a statistical data distribution algorithm (for example, an N-Sigma algorithm), a model based on a distance/density algorithm (for example, a local anomaly factor algorithm), a tree model (for example, an isolation forest (Isolation forest, Iforest)), a model based on a prediction-oriented algorithm (for example, an autoregressive integrated moving average model (Autoregressive Integrated Moving Average model, ARIMA)), or the like.

It should be noted that performance of the machine learning model during actual application largely depends on training data used to train the machine learning model. A higher similarity between a collection scenario of the training data and an application scenario of the model usually indicates better performance of the machine learning model. However, in a network scenario, services and networks are constantly changing, and different scenarios are generated. Therefore, it is impractical to train the machine learning model by using use different training data for different scenarios. Therefore, a case in which the machine learning model is trained by using one piece of training data, and the machine learning model is used in different scenarios occurs. Therefore, during actual application, the machine learning model inevitably leads to a problem of deterioration of model performance, that is, a scenario generalization problem of the model. Particularly, even if the collection scenario of the training data is very similar to the application scenario of the machine learning model, and the model performs well, the application scenario of the machine learning model may change. As a result, the collection scenario of the training data is still different from the application scenario of the machine learning model, that is, the problem of deterioration of model performance occurs. Therefore, how to maintain the model performance becomes an important challenge in the network.

In a related technology, a cloud device performs offline model training, and then directly deploys a model obtained after the offline training on a site device or a network device. However, the model obtained through training may not effectively adapt to a requirement of the site device or the network device, for example, a prediction performance (for example, an accuracy rate or a recall rate) requirement. On one hand, a training sample in a historical training sample set used by the cloud device is usually a pre-configured fixed training sample, and may not meet the requirement of the site device or the network device. On the other hand, even if the machine learning model obtained through training meets the requirement of the site device or the network device when the machine learning model is newly deployed on the site device or the network device, as time passes, because a category or a mode of feature data obtained by the site device or the network device changes, the machine learning model obtained through training does not meet the requirement of the site device anymore.

An embodiment of this application provides a model update method. In a subsequent embodiment, it is assumed that the first analysis device 101 is a cloud device, the site analysis device 102 is a site device, and the first model, the second model, and the third model all belong to the machine learning model. The site device receives the first model sent by the cloud device. The site device may train the first model by using a first training sample to obtain the second model. The site device may obtain differential data between the first model and the second model, and send the differential data to the cloud device, to request the cloud device to update the first model based on the differential data, where the differential data is obtained by the site device based on the first model and the second model, and the second model is obtained by the site device by training the first model by using the first training sample. The first training sample includes first feature data of the network device, and privacy of the differential data is higher than that of the first feature data. Therefore, privacy is improved on the basis that the first analysis device updates the first model to maintain model performance.

Further, the cloud device may receive a plurality of pieces of differential data sent by L site devices, and the cloud device updates the first model based on the plurality of pieces of differential data to obtain the third model. Compared with the second model obtained by the site device by incrementally training the first model by using the training sample, the third model can have better performance, and therefore generalization of a model can be improved.

An embodiment of this application provides a model update method. The method may be applied to any application scenario shown in FIG. 1 and FIG. 2. The first model may be used to predict a classification result. For example, the first model may be a binary classification model

For ease of differentiation, in a subsequent embodiment of this application, a classification result determined in a manual or label migration manner is referred to as a preset label, and a result obtained through prediction by the first model is referred to as a first inference result. The two results are substantially the same, and are both used to identify a category of a corresponding sample. An application scenario of the model update method usually includes a plurality of site devices.

The foregoing describes the network framework in the embodiments of this application, and the following describes the model update method in the embodiments of this application.

In the technical solutions of the embodiments of this application, the first model may be configured on the site device, or may be configured on the network device. The following separately describes the two configuration scenarios.

1. The first model may be configured on the site device.

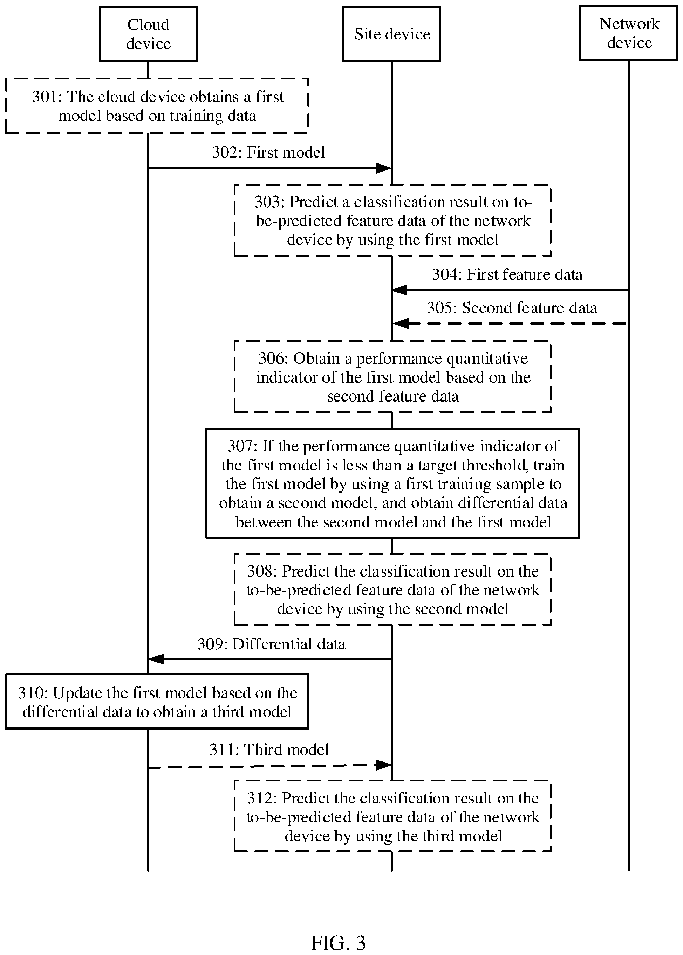

Refer to FIG. 3. An embodiment of the model update method in the embodiments of this application includes the following steps.

301: A cloud device obtains a first model based on training data.

The cloud device may obtain the training data, and then obtain the first model based on the training data. The training data may be historical feature data collected by the cloud device from a network device or some network devices, or the training data may be data separately configured by a model trainer based on an application scenario of a model. This is not specifically limited herein.

302: The cloud device sends the first model to a site device.

After the cloud device obtains the first model based on the historical data, the cloud device sends the first model to the site device.

303: The site device predicts a classification result on to-be-predicted feature data of the network device by using the first model.

As described above, different machine learning models may implement different functions. When the first model implements a classification function, after receiving the first model sent by the cloud device, the site device may predict the classification result by using the first model.

For example, if classification result prediction needs to be performed on online data of the network device, the data on which the classification result prediction needs to be performed may include a KPI whose feature category is a CPU and/or a KPI whose feature category is a memory (memory).

It is assumed that anomaly detection needs to be performed on the online data of the network device, that is, the classification result obtained through prediction indicates whether the data is abnormal. In this case, the site device may periodically perform an anomaly detection process, and the site device may obtain the to-be-predicted feature data of the network device, and perform online detection on the to-be-predicted feature data by using the first model. Anomaly detection results output by the first model are shown in Table 1 and Table 2. Table 1 and Table 2 record anomaly detection results of to-be-detected data obtained at different collection moments (also referred to as data generation moments), where the different collection moments include T1 to TN (N is an integer greater than 1), and the anomaly detection result indicates whether corresponding to-be-detected data is abnormal. Both the to-be-detected data in Table 1 and the to-be-detected data Table 2 include one-dimensional feature data. Table 1 records an anomaly detection result of to-be-detected data of the KPI whose feature category is the CPU. Table 2 records an anomaly detection result of to-be-detected data of the KPI whose feature category is the memory. It is assumed that 0 indicates normality and 1 indicates anomaly. Duration of an interval between every two collection moments from T1 to TN is a preset time periodicity. The collection moment T1 is used as an example. At this moment, the KPI whose feature category is the CPU in Table 1 is 0, and the KPI whose feature category is the memory in Table 2 is 1. This indicates that the KPI, whose feature category is the CPU, collected at the collection moment T1 is normal, and the KPI, whose feature category is the memory, collected at the collection moment T1 is abnormal.

**Table 1**

| Collection moment | KPI whose feature category is a CPU |
|---|---|
| T1 | 0 |
| T2 | 0 |
| ... | ... |
| Collection moment | KPI whose feature category is a CPU |
| TN | 0 |

**Table 2**

| Collection moment | KPI whose feature category is a memory |
|---|---|
| T1 | 1 |
| T2 | 0 |
| ... | ... |

(continued)

| Collection moment | KPI whose feature category is a memory |
|---|---|
| TN | 1 |

Optionally, step 303 may not be performed, because after receiving the first model, the site device may directly obtain a performance quantitative indicator of the first model. If the performance quantitative indicator of the first model is less than a target threshold, the site device trains the first model by using a first training sample. That is, before the first model is put into use, the site device first determines whether performance of the first model meets a condition. When the performance of the first model does not meet the condition, the first model is first updated.

304: The network device sends first feature data to the site device.

The first model may perform inference based on the to-be-predicted feature data of the network device, but the first model is configured on the site device. Therefore, the network device needs to send the first feature data to the site device.

Feature data of the network device is data generated by the network device. For example, when the network device is a camera, feature data of the camera may be image data collected and generated by the camera. For example, when the network device is a voice recorder, feature data of the voice recorder may be sound data collected and generated by the voice recorder. For example, when the network device is a switch, feature data of the switch may be KPI data, and the KPI data may be statistical information generated when the switch forwards traffic, for example, a quantity of outgoing packet bytes, a quantity of outgoing packets, a queue depth, throughput information, and a quantity of lost packets.

305: The network device sends second feature data to the site device.

The first model may perform inference based on the to-be-predicted feature data of the network device, but the first model is configured on the site device. Therefore, the network device needs to send the second feature data to the site device.

306: The site device obtains the performance quantitative indicator of the first model based on the second feature data.

After the site device obtains the second feature data, the site device may obtain the performance quantitative indicator of the first model based on the second feature data.

The first model is configured on the site device, and the site device may use the second feature data as an input of the first model to obtain a first inference result output by the first model. The site device may further obtain a preset label of the second feature data. The preset label may be obtained through inference by the site device based on the second feature data by using another model. Usually, complexity of the another model is higher than that of the first model, and an accuracy rate of the another model is higher than that of the first model. The another model has a disadvantage, for example, long inference time, except the accuracy rate, and consequently cannot adapt to online real-time inference. Therefore, the first model is configured on the site device. The site device obtains the accuracy rate of the first model based on the first inference result and the preset label, and the site device uses the accuracy rate as the performance quantitative indicator of the first model. For example, the second feature data includes 100 image samples. The first inference result is that 70 image samples each include a person, and none of 30 image samples includes a person. The preset label is that 80 image samples each include a person, and none of 20 image samples includes a person. In addition, the 70 image samples that each include a person in the first inference result belong to the 80 image samples that each include a person in the preset label. Therefore, the site device determines that the accuracy rate of the first model is:

$$(70+30-10)\div100\times100\%=90\%.$$

Optionally, the site device may not use the accuracy rate as the performance quantitative indicator of the first model, but use a recall rate as the performance quantitative indicator of the first model. The site device obtains the recall rate of the first model based on the first inference result and the preset label. The site device uses the recall rate as the performance quantitative indicator of the first model. The foregoing example is still used: The second feature data includes 100 image samples. The first inference result is that 70 image samples each include a person, and none of 30 image samples include a person. The preset label is that 80 image samples each include a person, and none of 20 image samples includes a person. In addition, the 70 image samples that each include a person in the first inference result belong to the 80 image samples that each include a person in the preset label. Therefore, the site device determines that the recall rate of the first model is:

$$70 \div 80 \times 100\% = 87.5\%.$$

It may be understood that, the site device may use the accuracy rate as the performance quantitative indicator of the first model, or the site device may use the recall rate as the performance quantitative indicator of the first model. During actual application, the site device may alternatively use another feature as the performance quantitative indicator of the first model. This is not specifically limited herein.

Optionally, the site device may further obtain a preset identifier through manual labeling.

It may be understood that, the site device may use the accuracy rate as the performance quantitative indicator of the first model, or the site device may use the recall rate as the performance quantitative indicator of the first model. During actual application, the site device may alternatively select one of the accuracy rate and the recall rate as the performance quantitative indicator of the first model, or the site device may select both the accuracy rate and the recall rate as performance quantitative indicators of the first model. This is not specifically limited herein.

Optionally, the site device may not obtain the second feature data, and the site device may obtain other data to obtain the performance quantitative indicator of the first model. In other words, the site device may obtain data on another device without obtaining the feature data on the network device, or may obtain data in storage space of the site device and obtain the performance quantitative indicator of the first model by using the data.

Optionally, the site device may not obtain the preset label by using another model. For example, the second feature data is feature data of the network device in the last month, the first inference result is an inference result obtained by the first model in this month, and the site device may obtain the preset label obtained by the first model based on the second feature data in the last month.

307: If the performance quantitative indicator of the first model is less than the target threshold, train the first model by using the first training sample to obtain a second model, and obtain differential data between the first model and the second model.

If the performance quantitative indicator of the first model is less than the target threshold, the site device incrementally trains the first model by using the first training sample to obtain the second model, and obtains the differential data between the first model and the second model.

Optionally, after the site device trains the first model by using the first training sample to obtain the second model, the site device may test performance of the second model by using test data, where the test data includes a ground truth label.

Optionally, when the site device tests the performance of the second model by using the test data, the site device may store degraded data, where the degraded data belongs to a part or all of the test data. When the site device tests the performance of the second model by using the test data, the site device may obtain an inference label of the test data by using the second model. The degraded data refers to test data whose inference label is not equal to the ground truth label. For example, the first training sample includes 500 pieces of sample data, ground truth labels of 400 samples each are 1, and ground truth labels of 100 samples each are 0. In a training process, the second model infers that inference labels of 405 samples each are 1, and inference labels of 95 samples each are 0. In the 405 samples whose inference labels inferred by the second model each are 1, ground truth labels of 10 samples each are 0. In the 95 samples whose inference labels inferred by the second model each are 0, inference labels of five samples each are 1. The site device obtains the 10 pieces of degraded data whose ground truth labels each are 0 but whose inference labels obtained through inference by the second model each are 1; and the five pieces of degraded data whose ground truth labels each are 1 but whose inference labels obtained through inference by the second model each are 0. The site device stores the degraded data. When the site device trains a model by using a training sample in the future, the site device adds the degraded data to the training sample.

It may be understood that a quantity of pieces of degraded data stored by the site device may be a quantity of some pieces of all degraded data or may be a quantity of all pieces of all degraded data. For example, there are 15 pieces of degraded data in total, and the site device may store 10 pieces of degraded data, or may store 15 pieces of degraded data. This is not specifically limited herein.

Optionally, the first training sample may include data determined based on a time series. For example, the first training sample may include data determined based on a KPI time series. Usually, each training sample in the first training sample corresponds to one time series, and the training sample may include feature data of one or more features extracted from the corresponding time series. A quantity of features corresponding to each training sample is the same as a quantity of pieces of feature data of the training sample (that is, a feature is in a one-to-one correspondence with feature data). A feature in a training sample refers to a feature of a corresponding time series, and may include a data feature and/or an extraction feature.

The data feature is a feature of data in the time series. For example, the data feature includes a data arrangement periodicity, a data change trend, or a data fluctuation, and correspondingly, feature data of the data feature includes data of the data arrangement periodicity, data of the data change trend, or data of the data fluctuation. The data arrangement periodicity refers to a periodicity related to data arrangement in a time series if data in the time series is periodically arranged. For example, the data of the data arrangement periodicity includes periodicity duration (that is, a time interval at which two periodicities are initiated) and/or a quantity of periodicities. The data of the data change trend is used to reflect a change trend (that is, the data change trend) of the data arrangement in the time series. For example, the data of the data change trend includes continuous growth, continuous decrease, first increase and then decrease, first decrease and then increase, or meeting normal distribution. The data of the data fluctuation is used to reflect a fluctuation status (that is, the data fluctuation) of the data in the time series. For example, the data of the data fluctuation includes a function that represents a fluctuation curve of the time series, or a specified value of the time series, for example, a maximum value, a minimum value, or an average value.

The extraction feature is a feature in a process of extracting the data in the time series. For example, the extraction feature includes a statistical feature, a fitting feature, or a frequency domain feature, and correspondingly, feature data of the extraction feature includes statistical feature data, fitting feature data, or frequency domain feature data. The statistical feature refers to a statistical feature of the time series, where the statistical feature is classified into a quantitative feature and an attribute feature, the quantitative feature is further classified into a metrological feature and a counting feature, and the quantitative feature may be directly represented by using a numerical value. For example, consumption of a plurality of resources such as CPU, memory, and IO resources is a metrological feature, and a quantity of anomalies and a quantity of devices that work normally are counting features. The attribute feature, for example, whether a device is abnormal or breaks down, cannot be directly represented by using a numerical value. A feature in the statistical feature is an indicator that needs to be checked during statistics collection. For example, the statistical feature data includes a moving average value (Moving_average) and a weighted average value (Weighted_mv). The fitting feature is a feature obtained during fitting of the time series, and the fitting feature data is used to reflect a feature, used for fitting, of the time series. For example, the fitting feature data includes an algorithm used during fitting, for example, an ARIMA. The frequency domain feature is a feature of the time series in frequency domain, and the frequency domain feature is used to reflect the feature of the time series in frequency domain. For example, the frequency domain feature data includes data about a rule followed by the time series distributed in frequency domain, for example, a proportion of a high frequency component in the time series. Optionally, the frequency domain feature data may be obtained by performing wavelet decomposition on the time series.

Assuming that a feature data in a training sample is obtained from a first time series, the data obtaining process may include: determining a target feature that needs to be extracted, and extracting feature data of the determined target feature from the first time series, to obtain a training sample including data of the obtained target feature. For example, the target feature that needs to be extracted is determined based on an application scenario of the model training method. In an optional example, the target feature is a pre-configured feature, for example, a feature configured by a user. In another optional example, the target feature is one or more of specified features. For example, the specified feature is the statistical feature.

It should be noted that the user may preset a specified feature, but the first time series may not have all specified features, and a first analysis device may sift, in the first time series, a feature belonging to the specified feature as the target feature. For example, the target feature includes the statistical feature, which includes one or more of a time series decomposition_periodic component (time series decompose_seasonal, Tsd_seasonal), a moving average value, a weighted average value, a time series classification, a maximum value, a minimum value, a quantile, a variance, a standard deviation, periodicity-to-periodicity comparison (year on year, yoy, which refers to comparison with the same periodicity), a daily fluctuation rate, a bucket entropy, a sample entropy, a moving average, an exponential moving average, a Gaussian distribution feature, a T distribution feature, or the like, and correspondingly, the target feature data includes data of the one or more statistical features;

and/or the target feature includes the fitting feature, which includes one or more of an autoregressive fitting error, a Gaussian process regression fitting error, or a neural network fitting error, and correspondingly, the target feature data includes data of the one or more fitting features;
and/or the target feature includes the frequency domain feature: a proportion of a high frequency component in the time series, and correspondingly, the target feature data includes data about the proportion of the high frequency component in the time series, where the data may be obtained by performing wavelet decomposition on the time series.

Table 3 is a schematic description of one sample in a training sample set. In Table 3, each training sample in the training sample set includes feature data of a KPI time series with one or more features, and the training sample corresponds to one KPI time series. In Table 3, a training sample whose identity (identification, ID) is KPI_1 includes feature data of four features, and the feature data of the four features is respectively a moving average value (Moving_average), a weighted average value (Weighted_mv), a time series decomposition_periodic component (time series decompose_seasonal, Tsd_seasonal), and a periodicity yoy. A KPI time series corresponding to the training sample is (x1, x2, ..., xn) (where the time series is usually obtained by sampling data of a KPI category), and a corresponding label is "abnormal".

**Table 3**

| Sample data ID | Time series | Feature description 1 | Feature description 2 | Feature description 3 | Feature description 4 | Label description |
|---|---|---|---|---|---|---|
| KPI_1 | (x1, x2, ..., xn) | Moving_average | Weighted_mv | Tsd_seasonal | Periodicity yoy | Abnormal |

In a second optional manner, the training sample obtained by the first analysis device may include data having a specific feature, and the training sample is the obtained data. For example, the training sample includes KPI data. As described above, assuming that a KPI is a network KPI, each sample may include network KPI data of one or more network KPI categories, that is, a feature corresponding to the sample is a KPI category.

Table 4 is a schematic description of one sample in a training sample set. In Table 4, each training sample in the training sample set includes network KPI data of one or more features. In Table 4, each training sample corresponds to a plurality of pieces of network KPI data obtained at a same collection moment. In Table 4, a training sample whose identity (identification, ID) is KPI_2 includes feature data of four features. The feature data of the four features is respectively network traffic, CPU utilization, a packet loss rate, and a delay, and a corresponding label is "normal".

Table 4

| Sample data ID | Feature description 1 | Feature description 2 | Feature description 3 | Feature description 4 | Label description |
|---|---|---|---|---|---|
| KPI_2 | Network traffic | CPU utilization | Packet loss rate | Delay | Normal |

Feature data corresponding to each feature in Table 3 and Table 4 is usually numerical data, that is, each feature has a feature value. For ease of description, Table 3 and Table 4 do not show the feature value. It is assumed that the training sample set stores the feature data in a fixed format, and a feature corresponding to the feature data may be a preset feature. In this case, feature data of the training sample set may be stored in a format in Table 3 or Table 4. During actual implementation in this embodiment of this application, a sample in the training sample set may alternatively have another form. This is not limited in this embodiment of this application.

It should be noted that, before offline training is performed, the first analysis device may preprocess the collected sample in the training sample set, and then perform the offline training based on a preprocessed training sample set. The preprocessing process is used to process the collected sample into a sample that meets a preset condition. The preprocessing process may include one or more of sample deduplication, data cleaning, and data supplementation.

Optionally, when the site device uses different features as performance quantitative indicators of the first model, target thresholds may be different. For example, when the site device uses the accuracy rate as the performance quantitative indicator of the first model, the target threshold is a first target threshold; when the site device uses the recall rate as the performance quantitative indicator of the first model, the target threshold is a second target threshold, where the first target threshold may be different from the first target threshold.

Optionally, when the site device simultaneously uses a plurality of different features as performance quantitative indicators of the first model, the site device may select a principle that a majority obeys a minority to determine whether the performance quantitative indicator of the first model meets the target threshold. For example, when the site device uses the accuracy rate as a first performance quantitative indicator of the first model, the target threshold is the first target threshold, and the first performance quantitative indicator is less than the first target threshold. When the site device further uses the recall rate as a second performance quantitative indicator of the first model, the target threshold is the second target threshold, and the second performance quantitative indicator is greater than the second target threshold. When the site device further uses the accuracy rate as a third performance quantitative indicator of the first model, the target threshold is a third target threshold, and the third performance quantitative indicator is greater than the third target threshold. The first model has three performance quantitative indicators, where the first performance quantitative indicator is less than the first target threshold, the second performance quantitative indicator is greater than the second target threshold, and the third performance quantitative indicator is greater than the third target threshold. Therefore, the first model has two performance quantitative indicators greater than the target thresholds, and has one performance quantitative indicator less than the target threshold. Based on the principle that the majority obeys the minority, the site device can determine that the performance quantitative indicator of the first model is greater than the target threshold.

Optionally, when the site device uses a plurality of different features as performance quantitative indicators of the first model, the site device may perform weighted processing on determining results of the different performance quantitative indicators. For example, when the site device uses the accuracy rate as the first performance quantitative indicator of the first model, the target threshold is the first target threshold, and the first performance quantitative indicator is less than the first target threshold. When the site device further uses the recall rate as the second performance quantitative indicator of the first model, the target threshold is the second target threshold, and the second performance quantitative indicator is greater than the second target threshold. When the site device further uses the accuracy rate as the third performance quantitative indicator of the first model, the target threshold is the third target threshold, and the third performance quantitative indicator is greater than the third target threshold. The site device performs, by using a coefficient 3, weighted processing on a determining result that the first performance quantitative indicator is less than the first target threshold, the site device performs, by using a coefficient 2, weighted processing on a determining result that the second performance quantitative indicator is greater than the second target threshold, and the site device performs, by using the coefficient 2, weighted processing on a determining result that the third performance quantitative indicator is greater than the third target threshold. A final determining result of the site device is: -3+2+2=1, where the final numerical value is positive. The site device determines that the performance quantitative indicator of the first model is greater than the target threshold.

Optionally, when the site device does not obtain the performance quantitative indicator of the first model, the site device may obtain time from time at which the first model is received to current time. When the time from the time at which the cloud device receives the first model to the current time is greater than a threshold, the site device trains the first model by using the first training sample to obtain the second model.

The training sample may have a plurality of forms. Correspondingly, the site device may obtain the training sample in a plurality of manners. In this embodiment, the following two optional manners are used as examples for description.

In a first optional manner, a training sample, in a first training sample set, obtained by the site device may include data determined based on a time series. For example, the training sample may include data determined based on a KPI time series. Refer to a structure of the historical training sample set. Usually, each training sample in the first training sample set corresponds to one time series, and the training sample may include feature data of one or more features extracted from the corresponding time series. A quantity of features corresponding to each training sample is the same as a quantity of pieces of feature data of the training sample (that is, a feature is in a one-to-one correspondence with feature data). A feature in a training sample refers to a feature of a corresponding time series, and may include a data feature and/or an extraction feature.

In an optional example, the site device may receive a time series sent by a network device (that is, a network device managed by the site device) connected to the site device in a corresponding site network. In another optional example, the site device has an input/output (I/O) interface, and receives a time series in a corresponding site network through the I/O interface. In still another optional example, the site device may read a time series from a storage device corresponding to the site device, and the storage device is configured to store the time series obtained in advance by the site device in a corresponding site network.

In a second optional manner, the training sample obtained by the site device may include data having a specific feature, and the training sample is the obtained data. For example, the training sample includes KPI data. As described above, assuming that a KPI is a network KPI, each sample may include network KPI data of one or more network KPI categories, that is, a feature corresponding to the sample is a KPI category.

308: The site device predicts the classification result on the to-be-predicted feature data of the network device by using the second model.

Step 308 is similar to step 303. Details are not described herein again.

309: The site device sends the differential data to the cloud device.

After the site device trains the first model by using the first training sample to obtain the second model, and obtains the differential data between the first model and the second model, the site device may send the differential data to the cloud device.

310: The cloud device updates the first model based on the differential data to obtain a third model.

After the cloud device receives the differential data sent by the site device, the cloud device updates the first model based on the differential data to obtain the third model.

Optionally, when there are a plurality of site devices connected to the cloud device, after the cloud device receives a plurality of pieces of differential data sent by the plurality of site devices, the cloud device updates the first model based on the plurality of pieces of differential data to obtain the third model.

Optionally, when there are N site devices connected to the cloud device, the cloud device collects statistics about a quantity L of site devices that send the differential data to the cloud device, where L is less than or equal to N. When a ratio of L to N is greater than a threshold K, and K is greater than 0 and less than or equal to 1 and may be specifically a value greater than 0.5, for example, 0.8, the cloud device updates the first model based on the received plurality of pieces of differential data to obtain the third model.

Optionally, when there are a plurality of site devices connected to the cloud device, and when the cloud device receives a plurality of pieces of differential data sent by the plurality of site devices, the cloud device obtains an average value of the plurality of pieces of differential data, and the cloud device updates the first model by using the average value to obtain the third model.

For example, the first model is updated based on differential data uploaded by a site device 1 and differential data uploaded by a site device 2. The differential data uploaded by the site device 1 and the differential data uploaded by the site device 2 are respectively [a2-a1, b2-b1, c2-c1, d2-d1] and [a3-a1, b3-b1, c3-c1, d3-d1], and an average value of the differential data uploaded by the two site devices is [(a2-a1+a3-a1)/2, (b2-b1+b3-b1)/2, (c2-c1+c3-c1)/2, (d2-d1+d3-d1)/2]. The first model is updated by using the average value.

Optionally, when there are a plurality of site devices connected to the cloud device, and when the cloud device receives a plurality of pieces of differential data sent by the plurality of site devices, the cloud device may obtain a weighted average value of the plurality of pieces of differential data, and the cloud device updates the first model by using the weighted average value of the plurality of pieces of differential data to obtain the third model.

For example, the cloud device receives differential data of three site devices, which are respectively first differential data of a first site device, second differential data of a second site device, and third differential data of a third site device. A ratio of a service data volume of the first site device to a service data volume of the second site device to a service data volume of the third site device is 0.8/1/1.2. The cloud device performs weighted processing on the first differential data by using the coefficient 0.8, the cloud device performs weighted processing on the second differential data by using the coefficient 1, and the cloud device performs weighted processing on the third differential data by using the coefficient 1.2. The network device updates the first model by using the weighted average value of the plurality of pieces of differential data to obtain the third model. An algorithm of a weighted average value of a plurality of pieces of differential data is as follows:

$A=(0.8\times B1+1\times B2+1.2\times B3)\div 3$, where

A is the weighted average value of the plurality of pieces of differential data, B1 is the first differential data, B2 is the second differential data, and B3 is the third differential data.

For another example, the cloud device receives differential data of three site devices, which are respectively first differential data of a first site device, second differential data of a second site device, and third differential data of a third site device. A ratio of a service data volume of the first site device to a service data volume of the second site device to a service data volume of the third site device is 0.2/0.2/0.6. The cloud device performs weighted processing on the first differential data by using the coefficient 0.2, the cloud device performs weighted processing on the second differential data by using the coefficient 0.2, and the cloud device performs weighted processing on the third differential data by using the coefficient 0.6. The network device updates the first model based on a plurality of pieces of differential data on which the weighted processing is already performed to obtain the third model. An algorithm of a weighted sum of a plurality of pieces of differential data is as follows:

$$A=0.2\times B1+0.2\times B2+0.6\times B3.$$

Because a sum of coefficients of the plurality of pieces of differential data is 1, the weighted sum of the plurality of pieces of differential data is a weighted average value of the plurality of pieces of differential data.

A is the weighted sum of the plurality of pieces of differential data, B1 is the first differential data, B2 is the second differential data, and B3 is the third differential data.

Optionally, the cloud device may not only perform weighted processing on the plurality of pieces of differential data based on service data volumes of site devices corresponding to the plurality of pieces of differential data, but also perform weighted processing on the plurality of pieces of differential data based on service importance of site devices corresponding to the plurality of pieces of differential data. The service importance of the site device may be set based on the experience of an operator.

Optionally, service importance of the site device may be determined based on a quantity of network devices connected to the site device. For example, if a quantity of network devices connected to the first site device is 2, a quantity of network devices connected to the second site device is 2, and a quantity of network devices connected to the third site device is 16, a ratio of service importance of the first site device to service importance of the second site device to service importance of the third site device may be 0.1/0.1/0.8.

311: The cloud device sends the third model to the site device.

After the cloud device updates the first model based on the differential data to obtain the third model, the cloud device may send the third model to the site device.

Optionally, when the cloud device receives a plurality of pieces of differential data sent by L site devices, the cloud device sends the third model to the L site devices.

Optionally, when the cloud device is connected to N site devices, and the cloud device receives a plurality of pieces of differential data sent by L site devices, the cloud device sends the third model to the N site devices.

Optionally, when the second model obtained through training by the site device by using the first training sample is the same as the third model, the site device may not send the third model to the site device.

312: The site device predicts the classification result on the to-be-predicted feature data of the network device by using the third model.

Step 312 is similar to step 303. Details are not described herein again.

2. The first model may be configured on the network device.

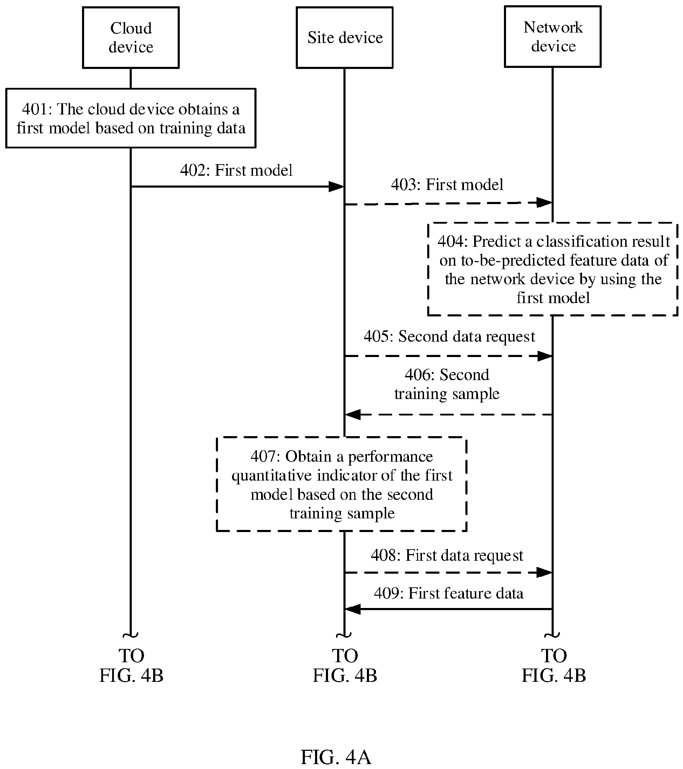

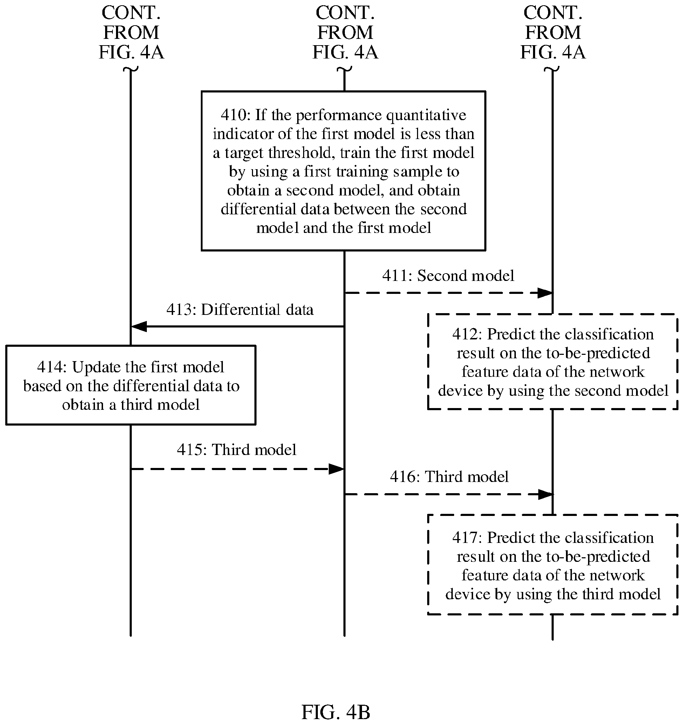

Refer to FIG. 4A and FIG. 4B. Another embodiment of the model update method in the embodiments of this application includes the following steps.

401: A cloud device obtains a first model based on training data.

402: The cloud device sends the first model to a site device.

Step 401 and step 402 are similar to step 301 and step 302 in FIG. 3. Details are not described herein again.

403: The site device sends the first model to a network device.

After the site device receives the first model, the site device may send the first model to the network device.

Optionally, step 403 may not be performed, because after receiving the first model, the site device may directly obtain a performance quantitative indicator of the first model. If the performance quantitative indicator of the first model is less than a target threshold, the site device trains the first model by using a first training sample. That is, before the first model is put into use, the site device first determines whether performance of the first model meets a condition. When the performance of the first model does not meet the condition, the first model is first updated.

404: The network device predicts a classification result on to-be-predicted feature data of the network device by using the first model.

As described above, different machine learning models may implement different functions. When the first model implements a classification function, after receiving the first model sent by the site device, the network device may predict the classification result by using the first model.

For example, if classification result prediction needs to be performed on online data of the network device, the data on which the classification result prediction needs to be performed may include a KPI whose feature category is a CPU and/or a KPI whose feature category is a memory (memory).

405: The site device sends a second data request to the network device.

When the site device needs to obtain the performance quantitative indicator of the first model, the site device may send the second data request to the network device, to request the network device to send a second training sample to the site device.

406: The network device sends the second training sample to the site device.

After the network device receives the second data request sent by the site device, the network device may send the second training sample to the site device, where the second training sample includes second feature data of the network device and a first inference result, and the first inference result is an inference result obtained by the network device based on the second feature data by using the first model.

Optionally, the network device may not send the first inference result to the site device, because the site device also has the first model. The site device may obtain the first inference result based on the received second feature data.

Optionally, when step 404 is not performed, the network device may send the second training sample to the site device when the second data request is not received. For example, the network device and the site device may agree in advance that the network device periodically sends the second training sample to the site device.

407: The site device obtains the performance quantitative indicator of the first model based on the second training sample.

After the site device obtains the second training sample, the site device may obtain the performance quantitative indicator of the first model based on the second training sample, and the site device may obtain a preset label of the second feature data. The preset label may be obtained through inference by the site device based on the second feature data by using another model. Usually, complexity of the another model is higher than that of the first model, and an accuracy rate of the another model is higher than that of the first model. The another model has a disadvantage, for example, long inference time, except the accuracy rate, and consequently cannot adapt to online real-time inference. Therefore, the first model is configured on the site device. The site device obtains the accuracy rate of the first model based on the first inference result and the preset label, and the site device uses the accuracy rate as the performance quantitative indicator of the first model.

Optionally, the site device may further obtain a preset identifier through manual labeling.

Optionally, when the site device does not receive the first inference result sent by the network device, the site device may obtain the first inference result. The first model is configured on the site device, and the site device may use the second feature data as an input of the first model to obtain the first inference result output by the first model.

Optionally, the site device may not use the accuracy rate as the performance quantitative indicator of the first model, but use a recall rate as the performance quantitative indicator of the first model. The site device obtains the accuracy rate of the first model based on the first inference result and the preset label. The site device uses the recall rate as the performance quantitative indicator of the first model.

It may be understood that, the site device may use the accuracy rate as the performance quantitative indicator of the first model, or the site device may use the recall rate as the performance quantitative indicator of the first model. During actual application, the site device may alternatively use another feature as the performance quantitative indicator of the first model. This is not specifically limited herein.

It may be understood that, the site device may use the accuracy rate as the performance quantitative indicator of the first model, or the site device may use the recall rate as the performance quantitative indicator of the first model. During actual application, the site device may alternatively select one of the accuracy rate and the recall rate as the performance quantitative indicator of the first model, or the site device may select both the accuracy rate and the recall rate as performance quantitative indicators of the first model. This is not specifically limited herein.

Optionally, the site device may not obtain the second feature data, and the site device may obtain other data to obtain the performance quantitative indicator of the first model. In other words, the site device may obtain data on another device without obtaining the feature data on the network device, or may obtain data in storage space of the site device and obtain the performance quantitative indicator of the first model by using the data.

Optionally, the site device may not obtain the preset label by using another model. For example, the second feature data is feature data of the network device in the last month, the first inference result is an inference result obtained by the first model in this month, and the site device may obtain the preset label obtained by the first model based on the second feature data in the last month.

408: The site device sends a first data request to the network device.

After the site device determines that the performance quantitative indicator of the first model is less than a target threshold, the site device may send the first data request to the network device, to request first feature data from the network device.

409: The network device sends the first feature data to the site device.

After the network device receives the first data request, the network device may send the first feature data to the site device.

Optionally, when step 408 is not performed, the network device may send the first feature data to the site device when the first data request is not received. For example, the network device and the site device may agree in advance that the network device periodically sends the first feature data to the site device.

410: If the performance quantitative indicator of the first model is less than the target threshold, train the first model by using the first training sample to obtain a second model, and obtain differential data between the second model and the first model.

Step 410 is similar to step 307 in FIG. 3. Details are not described herein again.

411: The site device sends the second model to the network device.

After the site device obtains the second model, the site device may send the second model to the network device.

412: The network device predicts the classification result on to-be-predicted feature data of the network device by using the second model.

Step 412 is similar to step 404. Details are not described herein again.

413: The site device sends the differential data to the cloud device.

414: The cloud device updates the first model based on the differential data to obtain a third model.

415: The cloud device sends the third model to the site device.

Step 413, step 414, and step 415 are similar to step 309, step 310, and step 311 in FIG. 3. Details are not described herein again.

416: The site device sends the third model to the network device.

After the site device obtains the third model, the site device may send the third model to the network device.

Optionally, when the site device is connected to a plurality of network devices, the site device sends the third model to the plurality of network devices.

417: The network device predicts the classification result on the to-be-predicted feature data of the network device by using the second model.

Step 417 is similar to step 404. Details are not described herein again.

It may be understood that there is no limited time series relationship between step 411, step 412, and step 413 to step 6.

The foregoing describes the model update method in the embodiments of this application, and the following describes a model update system in the embodiments of this application.

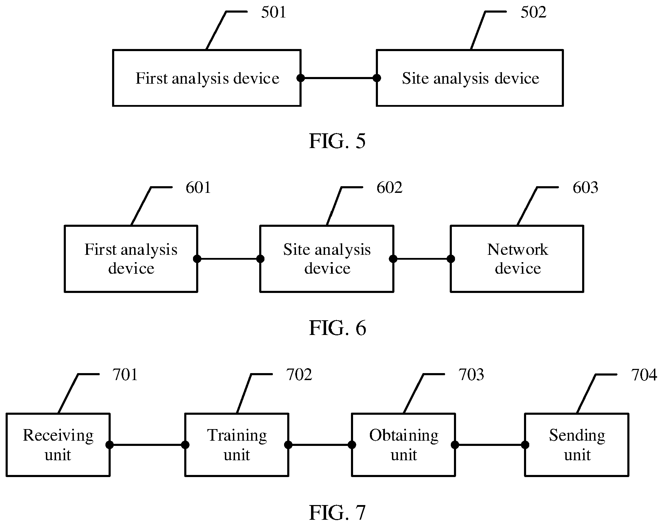

Refer to FIG. 5. An embodiment of the model update system in the embodiments of this application includes:

a site analysis device 502 and a first analysis device 501, where

the site analysis device 502 is configured to: receive a first model sent by the first analysis device 501; train the first model by using a first training sample to obtain a second model, where the first training sample includes first feature data of a network device in a site network corresponding to the site analysis device 502; obtain differential data between the first model and the second model; and send the differential data to the first analysis device 501; and the first analysis device 501 is configured to: send the first model to the site analysis device 502; receive the differential data sent by the site analysis device 502; and update the first model based on the differential data to obtain a third model.

In this embodiment, the site analysis device 502 may train the first model by using the first training sample to obtain the second model. The site analysis device 502 may obtain the differential data between the first model and the second model, and send the differential data to the first analysis device 501, to request the first analysis device 501 to update the first model based on the differential data, where the differential data is obtained by the site analysis device 502 based on the first model and the second model, and the second model is obtained by the site analysis device 502 by training the first model by using the first training sample. The first training sample includes the first feature data of the network device, and privacy of the differential data is higher than that of the first feature data. Therefore, privacy is improved on the basis that the first analysis device 501 updates the first model to maintain model performance.

Refer to FIG. 6. Another embodiment of the model update system in the embodiments of this application includes:

a site analysis device 602 and a first analysis device 601, where

the site analysis device 602 is configured to: receive a first model sent by the first analysis device 601; train the first model by using a first training sample to obtain a second model, where the first training sample includes first feature data of a network device in a site network corresponding to the site analysis device 602; obtain differential data between the first model and the second model; and send the differential data to the first analysis device 601; and the first analysis device 601 is configured to: send the first model to the site analysis device 602; receive the differential data sent by the site analysis device 602; and update the first model based on the differential data to obtain a third model.

The model update system in this embodiment further includes:

Optionally, the site analysis device 602 is further configured to: determine whether the first model is degraded; and train the first model by using the first training sample to obtain the second model if the site analysis device 602 determines that the first model is degraded.

Optionally, the system includes N site analysis devices 602, where N is an integer greater than 1.

The first analysis device 601 is specifically configured to: send the first model to the N site analysis devices 602; receive a plurality of pieces of differential data sent by L site analysis devices 602, where L is an integer greater than 1 and less than or equal to N; and update the first model based on the plurality of pieces of differential data to obtain a third model.

Optionally, the first analysis device 601 is further configured to: collect statistics about the quantity L of site analysis devices 602 that send the differential data to the first analysis device 601; and update the first model based on the differential data to obtain the third model if a ratio of L to N reaches a threshold K, where K is greater than 0 and less than or equal to 1.

Optionally, the system further includes:

a network device 603, where

the network device 603 is configured to: receive an updated model sent by the site analysis device 602, where the updated model includes the second model or the third model; and output an inference result based on to-be-predicted feature data of the network device 603 by using the updated model; and

the site analysis device 602 is further configured to send the updated model to the network device 603; or the network device 603 is configured to send to-be-predicted feature data to the site analysis device 602; and the site analysis device 602 is further configured to output an inference result based on the to-be-predicted feature data of the network device 603 by using an updated model.

Optionally, the network device 603 is specifically configured to predict a classification result based on the to-be-predicted feature data of the network device 603 by using the updated model; or the site analysis device 602 is specifically configured to predict a classification result based on the to-be-predicted feature data of the network device 603 by using the updated model.

Optionally, the to-be-predicted feature data includes KPI feature data, and the KPI feature data is feature data of a KPI time series or KPI data.

Optionally, the differential data is gradient information.

In this embodiment, the first analysis device 601 in the model update system is similar to the described cloud device in the embodiments shown in FIG. 3, FIG. 4A, and FIG. 4B, the site analysis device 602 is similar to the described site device in the embodiments shown in FIG. 3, FIG. 4A, and FIG. 4B, and the network device 603 is similar to the described network device in the embodiments shown in FIG. 3, FIG. 4A, and FIG. 4B. Details are not described herein.

The foregoing describes the model update system in the embodiments of this application, and the following describes a model update apparatus in the embodiments of this application.

Refer to FIG. 7. An embodiment of the model update apparatus in the embodiments of this application includes:

a receiving unit 701, configured to receive a first model sent by a first analysis device;
a training unit 702, configured to train the first model by using a first training sample to obtain a second model, where the first training sample includes first feature data of a network device in a site network corresponding to a site analysis device;
an obtaining unit 703, configured to obtain differential data between the first model and the second model; and
a sending unit 704, configured to send the differential data to the first analysis device, to request the first analysis device to update the first model based on the differential data to obtain a third model.

In this embodiment, the receiving unit 701 may receive the first model sent by the first analysis device. The training unit 702 may train the first model by using the first training sample to obtain the second model. The obtaining unit 703 may obtain the differential data between the first model and the second model. The sending unit 704 may send the differential data to the first analysis device, to request the first analysis device to update the first model based on the differential data to obtain the third model. The differential data is obtained by the obtaining unit 703 based on the first model and the second model, and the second model is obtained by the training unit 702 by training the first model by using the first training sample. The first training sample includes the first feature data of the network device, and privacy of the differential data is higher than that of the first feature data. Therefore, privacy is improved on the basis that the first analysis device updates the first model to maintain model performance.

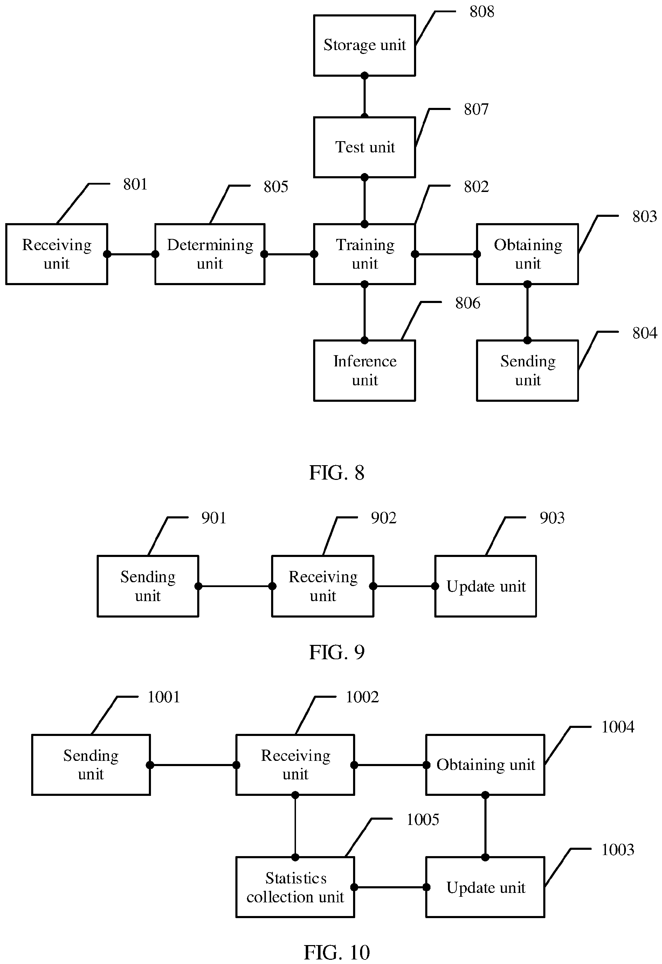

Refer to FIG. 8. Another embodiment of the model update apparatus in the embodiments of this application includes:

a receiving unit 801, configured to receive a first model sent by a first analysis device;
a training unit 802, configured to train the first model by using a first training sample to obtain a second model, where the first training sample includes first feature data of a network device in a site network corresponding to a site analysis device;
an obtaining unit 803, configured to obtain differential data between the first model and the second model; and
a sending unit 804, configured to send the differential data to the first analysis device, to request the first analysis device to update the first model based on the differential data to obtain a third model.

The model update apparatus in this embodiment further includes:

Optionally, the model update apparatus further includes:

a determining unit 805, configured to determine whether the first model is degraded, where the training unit 802 trains the first model by using the first training sample to obtain the second model if the determining unit 805 determines that the first model is degraded.

Optionally, the obtaining unit 803 is further configured to obtain a performance quantitative indicator of the first model;

the determining unit 805 is further configured to determine whether the performance quantitative indicator of the first model is less than a target threshold; and
the determining unit 805 is specifically configured to determine that the first model is degraded if the performance quantitative indicator of the first model is less than the target threshold.

Optionally, the obtaining unit 803 is further configured to obtain second feature data of the network device;

the obtaining unit 803 is further configured to obtain a first inference result obtained by the first model based on the second feature data; and
the obtaining unit 803 is specifically configured to: obtain an accuracy rate of the first model based on the first inference result and a preset label of the second feature data, and use the accuracy rate as the performance quantitative indicator of the first model; or the obtaining unit 803 is specifically configured to: obtain a recall rate of the first model based on the first inference result and a preset label of the second feature data, and use the recall rate as the performance quantitative indicator of the first model.

Optionally, the sending unit 804 is further configured to send a first data request to the network device, to request the network device to send a second training sample to the site analysis device, where the second training sample includes the second feature data and the first inference result, and the first inference result is obtained by the first model based on the second feature data.

Optionally, the sending unit 804 is further configured to send an updated model to the network device, where the updated model includes the second model or the third model, and is configured to output an inference result based on to-be-predicted feature data of the network device.

Optionally, the sending unit 804 is further configured to send an updated model to the network device, where the updated model includes the second model or the third model, and is configured to predict a classification result based on to-be-predicted feature data of the network device, and the to-be-predicted feature data includes KPI feature data.

Optionally, the receiving unit 801 is further configured to receive to-be-predicted feature data of the network device.

The apparatus further includes:

an inference unit 806, configured to output an inference result based on the to-be-predicted feature data of the network device by using an updated model, where the updated model includes the second model or the third model.

Optionally, the to-be-predicted feature data includes key performance indicator KPI feature data, and the inference unit 806 is specifically configured to predict a classification result based on the to-be-predicted feature data of network device by using the updated model.

Optionally, the KPI feature data is feature data of a KPI time series or KPI data.

Optionally, the apparatus further includes:

a test unit 807, configured to test the second model by using test data, where the test data includes a ground truth label; and

a storage unit 808, configured to store degraded data, to enable the site analysis device to update a model in the site analysis device by using the degraded data, where the degraded data belongs to the test data, an inference label of the degraded data is not equal to the ground truth label, and the inference label is obtained by the site analysis device by testing the second model by using the test data.

In this embodiment, operations performed by the units in the model update apparatus are similar to those described in the embodiments shown in FIG. 3, FIG. 4A, and FIG. 4B. Details are not described herein again.

Refer to FIG. 9. Another embodiment of the model update apparatus in the embodiments of this application includes:

a sending unit 901, configured to send a first model to a site analysis device, where the first model is configured to output an inference result based on to-be-predicted feature data of a network device;

a receiving unit 902, configured to receive differential data between the first model and a second model, where the second model is obtained by the site analysis device by training the first model by using a first training sample, and the first training sample includes first feature data of the network device in a site network corresponding to the site analysis device; and

an update unit 903, configured to update the first model based on the differential data to obtain a third model.

In this embodiment, the sending unit 901 may send the first model to the site analysis device, the receiving unit 902 may receive the differential data between the first model and the second model, and the update unit 903 may update the first model by using the differential data to obtain the third model. The differential data is obtained by the site analysis device based on the first model and the second model, and the second model is obtained by the site analysis device by training the first model by using the first training sample. The first training sample includes the first feature data of the network device, and privacy of the differential data is higher than that of the first feature data. Therefore, privacy is improved on the basis that the update unit 903 updates the first model to maintain model performance.

Refer to FIG. 10. Another embodiment of the model update apparatus in the embodiments of this application includes:

a sending unit 1001, configured to send a first model to a site analysis device, where the first model is configured to output an inference result based on to-be-predicted feature data of a network device;

a receiving unit 1002, configured to receive differential data between the first model and a second model, where the second model is obtained by the site analysis device by training the first model by using a first training sample, and the first training sample includes first feature data of the network device in a site network corresponding to the site analysis device; and
an update unit 1003, configured to update the first model based on the differential data to obtain a third model.

The model update apparatus in this embodiment further includes:

Optionally, the sending unit 1001 is specifically configured to send the first model to N site analysis devices, where N is an integer greater than 1;

the receiving unit 1002 is specifically configured to receive a plurality of pieces of differential data sent by L site analysis devices, where L is an integer greater than 1 and less than or equal to N;
the update unit 1003 is specifically configured to update the first model based on the plurality of pieces of differential data to obtain the third model; and
the sending unit 1001 is further configured to send the third model to the N site analysis devices.

Optionally, the apparatus further includes:

an obtaining unit 1004, configured to obtain an average value of the plurality of pieces of differential data, where
the update unit 1003 is specifically configured to update the first model by using the average value of plurality of pieces of differential data to obtain the third model; or
an obtaining unit 1004, configured to obtain a weighted average value of the plurality of pieces of differential data, where
the update unit 1003 is specifically configured to update the first model by using the weighted average value to obtain the third model.

Optionally, the apparatus further includes:

a statistics collection unit 1005, configured to collect statistics about the quantity L of site analysis devices that send the differential data to a first analysis device, where
the update unit 1003 is specifically configured to update the first model based on the differential data to obtain the third model if a ratio of L to N reaches a threshold K, where K is greater than 0 and less than or equal to 1.

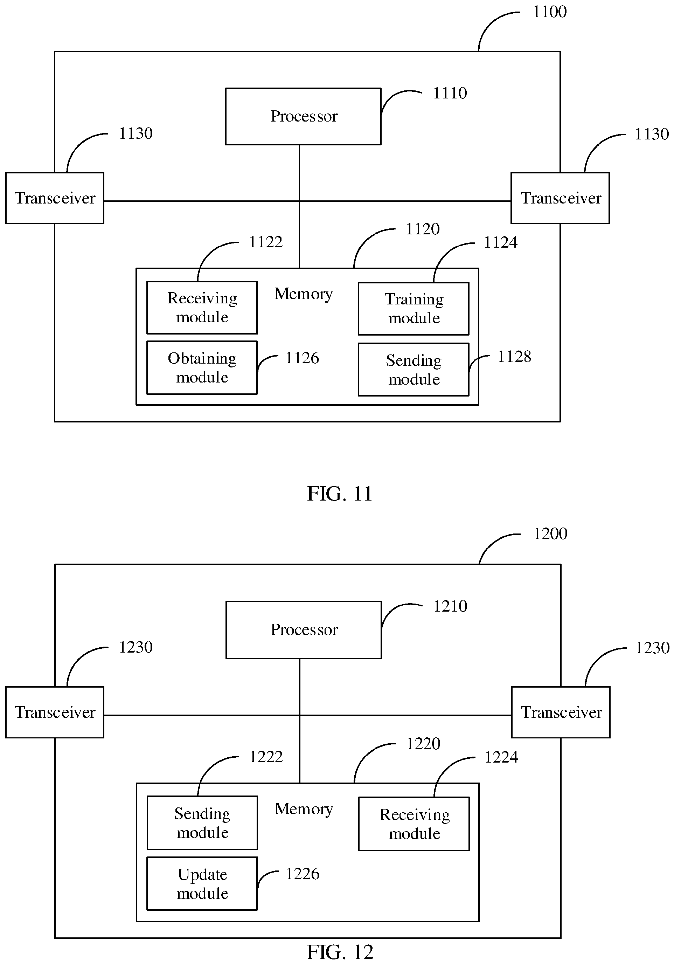

In this embodiment, operations performed by the units in the model update apparatus are similar to those described in the embodiments shown in FIG. 3, FIG. 4A, and FIG. 4B. Details are not described herein again.
The foregoing describes the model update apparatus in the embodiments of this application, and the following describes a model update device in the embodiments of this application.
Refer to FIG. 11. An embodiment of a model update device 1100 in the embodiments of this application includes:
As shown in FIG. 11, the model update device 1100 includes a processor 1110, a memory 1120 coupled to the processor 1110, and a transceiver 1130. The model update device 1100 may be the site device in FIG. 2 and FIG. 3. The processor 1110 may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field programmable gate array (English: field programmable gate array, FPGA for short), generic array logic (English: generic array logic, GAL for short), or any combination thereof. The processor 1110 may be one processor, or may include a plurality of processors. The memory 1120 may include a volatile memory (English: volatile memory) such as a random access memory (English: random access memory, RAM for short), or the memory may include a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short). Alternatively, the memory may include a combination of the foregoing types of memories. The memory 1120 stores computer-readable instructions. The computer-readable instructions include a plurality of software modules, for example, a receiving module 1122, a training module 1124, an obtaining module 1126, and a sending module 1128. After executing each software module, the processor 1110 may perform a corresponding operation based on an indication of each software module. In this embodiment, an operation performed by a software module is actually the operation performed by the processor 1110 based on the indication of the software module. The receiving module 1122 is configured to receive a first model sent by a first analysis device. The training module 1124 is configured to train the first model by using a first training sample to obtain a second model, where the first training sample includes first feature data of a network device in a site device corresponding to a site analysis device. The obtaining module 1126 is configured to obtain differential data between the first model and the second model. The sending module 1128 is configured to send the differential data to the first analysis device, to request the first analysis device to update the first model based on the differential data to obtain a third model. In addition, after executing the computer-readable instructions in the memory 1120, the processor 1110 may perform, according to indications of the computer-readable instructions, all operations that may be performed by the site device, for example, operations performed by the site device in the embodiments corresponding to FIG. 3, FIG. 4A, and FIG. 4B.

Refer to FIG. 12. An embodiment of a model update device 1200 in the embodiments of this application includes:

As shown in FIG. 12, the model update device 1200 includes a processor 1210, a memory 1220 coupled to the processor 1210, and a transceiver 1230. The model update device 1200 may be the cloud device in FIG. 2 and FIG. 3. The processor 1210 may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field programmable gate array (English: field programmable gate array, FPGA for short), generic array logic (English: generic array logic, GAL for short), or any combination thereof. The processor 1210 may be one processor, or may include a plurality of processors. The memory 1220 may include a volatile memory (English: volatile memory) such as a random access memory (English: random access memory, RAM for short), or the memory may include a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short). Alternatively, the memory may include a combination of the foregoing types of memories. The memory 1220 stores computer-readable instructions. The computer-readable instructions include a plurality of software modules, for example, a sending module 1222, a receiving module 1224, and an update module 1226. After executing each software module, the processor 1210 may perform a corresponding operation based on an indication of each software module. In this embodiment, an operation performed by a software module is actually the operation performed by the processor 1210 based on the indication of the software module. The sending module 1222 is configured to send a first model to a site analysis device, where the first model is configured to output an inference result based on to-be-predicted feature data of a network device. The receiving module 1224 is configured to receive differential data between the first model and the second model, where the second model is obtained by the site analysis device by training the first model by using a first training sample, and the first training sample includes first feature data of a network device in a site network corresponding to the site analysis device. The update module 1226 is configured to update the first model based on the differential data to obtain a third model.

In addition, after executing the computer-readable instructions in the memory 1220, the processor 1210 may perform, according to indications of the computer-readable instructions, all operations that may be performed by the cloud device, for example, operations performed by the cloud device in the embodiments corresponding to FIG. 3, FIG. 4A, and FIG. 4B.

In the several embodiments provided in this application, it should be understood that the disclosed system, apparatus, and method may be implemented in other manners. For example, the described apparatus embodiment is merely an example. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM, read-only memory), a random access memory (RAM, random access memory), a magnetic disk, or an optical disc.

**Claims**

1. A model update system, comprising:

   a site analysis device and a first analysis device, wherein
   the site analysis device is configured to: receive a first model sent by the first analysis device; train the first model by using a first training sample to obtain a second model, wherein the first training sample comprises first feature data of a network device in a site network corresponding to the site analysis device; obtain differential data between the first model and the second model; and send the differential data to the first analysis device; and
   the first analysis device is configured to: send the first model to the site analysis device; receive the differential data sent by the site analysis device; and update the first model based on the differential data to obtain a third model.

2. The system according to claim 1, wherein
   the site analysis device is further configured to: determine whether the first model is degraded; and train the first model by using the first training sample to obtain the second model if the site analysis device determines that the first model is degraded.

3. The system according to claim 2, wherein the system comprises N site analysis devices, wherein N is an integer greater than 1; and
   the first analysis device is specifically configured to: send the first model to the N site analysis devices; receive a plurality of pieces of differential data sent by L site analysis devices, wherein L is an integer greater than 1 and less than or equal to N; and update the first model based on the plurality of pieces of differential data to obtain the third model.

4. The system according to claim 3, wherein
   the first analysis device is further configured to: collect statistics about the quantity L of site analysis devices that send the differential data to the first analysis device; and update the first model based on the differential data to obtain the third model if a ratio of L to N reaches a threshold K, wherein K is greater than 0 and less than or equal to 1.

5. The system according to any one of claims 1 to 4, wherein the system further comprises:

   the network device, wherein
   the network device is configured to: receive an updated model sent by the site analysis device, wherein the updated model comprises the second model or the third model; and output an inference result based on to-be-predicted feature data of the network device by using the updated model; and
   the site analysis device is further configured to send the updated model to the network device; or
   the network device is configured to send to-be-predicted feature data of the network device to the site analysis device; and
   the site analysis device is further configured to output an inference result based on the to-be-predicted feature data of the network device by using an updated model.

6. The system according to claim 5, wherein

   the network device is specifically configured to predict a classification result based on the to-be-predicted feature data of the network device by using the updated model; or
   the site analysis device is specifically configured to predict a classification result based on the to-be-predicted feature data of the network device by using the updated model.

7. The system according to claim 6, wherein the to-be-predicted feature data comprises key performance indicator KPI feature data, and the KPI feature data is feature data of a KPI time series or KPI data.

8. The system according to any one of claims 1 to 7, wherein the differential data is gradient information.

9. A model update method, comprising:

receiving, by a site analysis device, a first model sent by a first analysis device;
training, by the site analysis device, the first model by using a first training sample to obtain a second model, wherein the first training sample comprises first feature data of a network device in a site network corresponding to the site analysis device;
obtaining, by the site analysis device, differential data between the first model and the second model; and
sending, by the site analysis device, the differential data to the first analysis device, to request the first analysis device to update the first model based on the differential data to obtain a third model.

10. The method according to claim 9, wherein the method further comprises:
determining, by the site analysis device, whether the first model is degraded; and performing the step of training, by the site analysis device, the first model by using a first training sample to obtain a second model if the site analysis device determines that the first model is degraded.

11. The method according to claim 10, wherein the method further comprises:

obtaining, by the site analysis device, a performance quantitative indicator of the first model;
determining, by the site analysis device, whether the performance quantitative indicator of the first model is less than a target threshold; and
determining, by the site analysis device, that the first model is degraded if the performance quantitative indicator of the first model is less than the target threshold.

12. The method according to claim 11, wherein the method further comprises:

obtaining, by the site analysis device, second feature data of the network device; and
obtaining, by the site analysis device, a first inference result obtained by the first model based on the second feature data; and
the obtaining, by the site analysis device, a performance quantitative indicator of the first model comprises:
obtaining, by the site analysis device, an accuracy rate of the first model based on the first inference result and a preset label of the second feature data, and using the accuracy rate as the performance quantitative indicator of the first model; or obtaining, by the site analysis device, a recall rate of the first model based on the first inference result and a preset label of the second feature data, and using the recall rate as the performance quantitative indicator of the first model.

13. The method according to claim 12, wherein the method further comprises:
sending, by the site analysis device, a first data request to the network device, to request the network device to send a second training sample to the site analysis device, wherein the second training sample comprises the second feature data and the first inference result, and the first inference result is obtained by the first model based on the second feature data.

14. The method according to any one of claims 9 to 13, wherein the method further comprises:
sending, by the site analysis device, an updated model to the network device, wherein the updated model comprises the second model or the third model, and is used to output an inference result based on to-be-predicted feature data of the network device.

15. The method according to any one of claims 9 to 13, wherein the method further comprises:
sending, by the site analysis device, an updated model to the network device, wherein the updated model comprises the second model or the third model, and is used to predict a classification result based on to-be-predicted feature data of the network device, and the to-be-predicted feature data comprises KPI feature data.

16. The method according to any one of claims 9 to 13, wherein the method further comprises:

receiving, by the site analysis device, to-be-predicted feature data of the network device; and
outputting, by the site analysis device, an inference result based on the to-be-predicted feature data of the network device by using an updated model, wherein the updated model comprises the second model or the third model.

17. The method according to claim 16, wherein the to-be-predicted feature data comprises KPI feature data; and
the outputting, by the site analysis device, an inference result based on the to-be-predicted feature data of the network device by using an updated model comprises:
predicting, by the site analysis device, a classification result based on the to-be-predicted feature data of the network device by using the updated model.

18. The method according to claim 15 or 17, wherein the KPI feature data is feature data of a KPI time series or KPI data.

19. The method according to any one of claims 9 to 18, wherein the method further comprises:

testing, by the site analysis device, the second model by using test data, wherein the test data comprises a ground truth label; and
storing, by the site analysis device, degraded data, to enable the site analysis device to update a model in the site analysis device by using the degraded data, wherein the degraded data belongs to the test data, an inference label of the degraded data is not equal to the ground truth label, and the inference label is obtained by the site analysis device by testing the second model by using the test data.

20. A model update method, comprising:

sending, by a first analysis device, a first model to a site analysis device, wherein the first model is configured to output an inference result based on to-be-predicted feature data of a network device;
receiving, by the first analysis device, differential data between the first model and a second model, wherein the second model is obtained by the site analysis device by training the first model by using a first training sample, and the first training sample comprises first feature data of the network device in a site network corresponding to the site analysis device; and
updating, by the first analysis device, the first model based on the differential data to obtain a third model.

21. The method according to claim 20, wherein

the sending, by a first analysis device, a first model to a site analysis device comprises:
sending, by the first analysis device, the first model to N site analysis devices, wherein N is an integer greater than 1;
the receiving, by the first analysis device, differential data between the first model and a second model comprises:
receiving, by the first analysis device, a plurality of pieces of differential data sent by L site analysis devices, wherein L is an integer greater than 1 and less than or equal to N;
the updating, by the first analysis device, the first model based on the differential data to obtain a third model comprises:
updating, by the first analysis device, the first model based on the plurality of pieces of differential data to obtain the third model; and
the method further comprises:
sending, by the first analysis device, the third model to the N site analysis devices.

22. The method according to claim 21, wherein the method further comprises:

obtaining, by the first analysis device, an average value of the plurality of pieces of differential data; and
the updating, by the first analysis device, the first model based on the plurality of pieces of differential data to obtain the third model comprises:
updating, by the first analysis device, the first model by using the average value of the plurality of pieces of differential data to obtain the third model.

23. The method according to claim 21, wherein the method further comprises:

obtaining, by the first analysis device, a weighted average value of the plurality of pieces of differential data; and
the updating, by the first analysis device, the first model based on the plurality of pieces of differential data to obtain the third model comprises:
updating, by the first analysis device, the first model by using the weighted average value to obtain the third model.

24. The method according to any one of claims 20 to 23, wherein the method further comprises:

collecting, by the first analysis device, statistics about the quantity L of site analysis devices that send the differential data to the first analysis device; and
performing the step of updating, by the first analysis device, the first model based on the differential data to obtain a third model if a ratio of L to N reaches a threshold K, wherein K is greater than 0 and less than or equal to 1.

25. A model update apparatus, comprising:

a receiving unit, configured to receive a first model sent by a first analysis device;
a training unit, configured to train the first model by using a first training sample to obtain a second model, wherein the first training sample comprises first feature data of a network device in a site network corresponding to a site analysis device;
an obtaining unit, configured to obtain differential data between the first model and the second model; and
a sending unit, configured to send the differential data to the first analysis device, to request the first analysis device to update the first model based on the differential data to obtain a third model.

26. The apparatus according to claim 25, wherein the apparatus further comprises:
a determining unit, configured to determine whether the first model is degraded, wherein the training unit trains the first model by using the first training sample to obtain the second model if the determining unit determines that the first model is degraded.

27. The apparatus according to claim 26, wherein

the obtaining unit is further configured to obtain a performance quantitative indicator of the first model;
the determining unit is further configured to determine whether the performance quantitative indicator of the first model is less than a target threshold; and
the determining unit is specifically configured to determine that the first model is degraded if the performance quantitative indicator of the first model is less than the target threshold.

28. The apparatus according to claim 27, wherein

the obtaining unit is further configured to obtain second feature data of the network device;
the obtaining unit is further configured to obtain a first inference result obtained by the first model based on the second feature data; and
the obtaining unit is specifically configured to: obtain an accuracy rate of the first model based on the first inference result and a preset label of the second feature data, and use the accuracy rate as the performance quantitative indicator of the first model; or the obtaining unit is specifically configured to: obtain a recall rate of the first model based on the first inference result and a preset label of the second feature data, and use the recall rate as the performance quantitative indicator of the first model.

29. The apparatus according to any one of claims 25 to 28, wherein
the sending unit is further configured to send an updated model to the network device, wherein the updated model comprises the second model or the third model, and is configured to predict a classification result based on to-be-predicted feature data of the network device, and the to-be-predicted feature data comprises KPI feature data.

30. The apparatus according to any one of claims 25 to 28, wherein

the receiving unit is further configured to receive to-be-predicted feature data of the network device; and
the apparatus further comprises:
an inference unit, configured to output an inference result based on the to-be-predicted feature data of the network device by using an updated model, wherein the updated model comprises the second model or the third model.

31. The apparatus according to any one of claims 25 to 30, wherein the apparatus further comprises:

a test unit, configured to test the second model by using test data, wherein the test data comprises a ground truth label; and
a storage unit, configured to store degraded data, to enable the site analysis device to update a model in the site analysis device by using the degraded data, wherein the degraded data belongs to the test data, an inference label of the degraded data is not equal to the ground truth label, and the inference label is obtained by the site analysis device by testing the second model by using the test data.

32. A model update apparatus, comprising:

a sending unit, configured to send a first model to a site analysis device, wherein the first model is configured to output an inference result based on to-be-predicted feature data of a network device;
a receiving unit, configured to receive differential data between the first model and a second model, wherein the second model is obtained by the site analysis device by training the first model by using a first training sample, and the first training sample comprises first feature data of the network device in a site network corresponding to the site analysis device; and
an update unit, configured to update the first model based on the differential data to obtain a third model.

33. The apparatus according to claim 32, wherein

the sending unit is specifically configured to send the first model to N site analysis devices, wherein N is an integer greater than 1;
the receiving unit is specifically configured to receive a plurality of pieces of differential data sent by L site analysis devices, wherein L is an integer greater than 1 and less than or equal to N;
the update unit is specifically configured to update the first model based on the plurality of pieces of differential data to obtain the third model; and
the sending unit is further configured to send the third model to the N site analysis devices.

34. The apparatus according to claim 33, wherein the apparatus further comprises an obtaining unit, wherein

the obtaining unit is configured to obtain an average value of the plurality of pieces of differential data; and
the update unit is specifically configured to update the first model by using the average value of plurality of pieces of differential data to obtain the third model; or
the obtaining unit is configured to obtain a weighted average value of the plurality of pieces of differential data; and
the update unit is specifically configured to update the first model by using the weighted average value to obtain the third model.

35. The apparatus according to any one of claims 32 to 34, wherein the apparatus further comprises:

a statistics collection unit, configured to collect statistics about the quantity L of site analysis devices that send the differential data to a first analysis device, wherein
the update unit is specifically configured to update the first model based on the differential data to obtain the third model if a ratio of L to N reaches a threshold K, wherein K is greater than 0 and less than or equal to 1.

36. A model update device, comprising a memory and a processor, wherein

the memory is configured to store a program; and
the processor is configured to execute the program in the memory, comprising performing the method according to any one of claims 9 to 19, or performing the method according to any one of claims 20 to 24.

37. A computer storage medium, wherein the computer storage medium stores instructions, and when the instructions are executed on a computer, the computer is enabled to perform the method according to any one of claims 9 to 19, or the computer is enabled to perform the method according to any one of claims 20 to 24.

FIG. 1

FIG. 2

```
┌──────────┐              ┌──────────┐              ┌──────────┐
│  Cloud   │              │   Site   │              │ Network  │
│  device  │              │  device  │              │  device  │
└──────────┘              └──────────┘              └──────────┘
```

┌─────────────────────────────────────────┐
│ 301: The cloud device obtains a first     │
│ model based on training data              │
└─────────────────────────────────────────┘

302: First model

┌─────────────────────────────────────────┐
│ 303: Predict a classification result on to-│
│ be-predicted feature data of the network  │
│ device by using the first model           │
└─────────────────────────────────────────┘

304: First feature data

305: Second feature data

┌─────────────────────────────────────────┐
│ 306: Obtain a performance quantitative     │
│ indicator of the first model based on the  │
│ second feature data                        │
└─────────────────────────────────────────┘

┌─────────────────────────────────────────┐
│ 307: If the performance quantitative indicator of │
│ the first model is less than a target threshold, train │
│ the first model by using a first training sample to │
│ obtain a second model, and obtain differential data │
│ between the second model and the first model │
└─────────────────────────────────────────┘

┌─────────────────────────────────────────┐
│ 308: Predict the classification result on the │
│ to-be-predicted feature data of the network  │
│ device by using the second model             │
└─────────────────────────────────────────┘

309: Differential data

┌─────────────────────────────────────────┐
│ 310: Update the first model based on the   │
│ differential data to obtain a third model  │
└─────────────────────────────────────────┘

311: Third model

┌─────────────────────────────────────────┐
│ 312: Predict the classification result on the │
│ to-be-predicted feature data of the network  │
│ device by using the third model              │
└─────────────────────────────────────────┘

FIG. 3

```
   ┌──────────┐          ┌──────────┐          ┌──────────┐
   │  Cloud   │          │Site device│         │ Network  │
   │  device  │          │          │          │  device  │
   └────┬─────┘          └────┬─────┘          └────┬─────┘
```

┌─────────────────────────────┐
│ 401: The cloud device obtains a │
│ first model based on training data │
└─────────────────────────────┘

402: First model

403: First model

┌────────────────────────────────────┐
│ 404: Predict a classification result │
│ on to-be-predicted feature data of   │
│ the network device by using the      │
│ first model                          │
└────────────────────────────────────┘

405: Second data request

406: Second
training sample

┌────────────────────────────────┐
│ 407: Obtain a performance        │
│ quantitative indicator of the first │
│ model based on the second         │
│ training sample                   │
└────────────────────────────────┘

408: First data request

409: First feature data

TO
FIG. 4B

TO
FIG. 4B

TO
FIG. 4B

FIG. 4A

CONT.
FROM
FIG. 4A

CONT.
FROM
FIG. 4A

CONT.
FROM
FIG. 4A

410: If the performance quantitative indicator of the first model is less than a target threshold, train the first model by using a first training sample to obtain a second model, and obtain differential data between the second model and the first model

411: Second model

413: Differential data

412: Predict the classification result on the to-be-predicted feature data of the network device by using the second model

414: Update the first model based on the differential data to obtain a third model

415: Third model

416: Third model

417: Predict the classification result on the to-be-predicted feature data of the network device by using the third model

FIG. 4B

501

502

First analysis device —— Site analysis device

FIG. 5

601

602

603

First analysis device —— Site analysis device —— Network device

FIG. 6

701

702

703

704

Receiving unit —— Training unit —— Obtaining unit —— Sending unit

FIG. 7

808

Storage unit

807

Test unit

801

Receiving unit

805

Determining unit

802

Training unit

803

Obtaining unit

806

Inference unit

804

Sending unit

FIG. 8

901

Sending unit

902

Receiving unit

903

Update unit

FIG. 9

1001

Sending unit

1002

Receiving unit

1004

Obtaining unit

1005

Statistics collection unit

1003

Update unit

FIG. 10

1100

1110

Processor

1130

Transceiver

1130

Transceiver

1122

1120

1124

Receiving
module

Memory

Training
module

Obtaining
module

1126

Sending
module

1128

**FIG. 11**

1200

1210

Processor

1230

Transceiver

1230

Transceiver

1222

1220

1224

Sending
module

Memory

Receiving
module

Update
module

1226

**FIG. 12**

## INTERNATIONAL SEARCH REPORT

| International application No. |
|---|
| **PCT/CN2020/119859** |

**A.    CLASSIFICATION OF SUBJECT MATTER**

G06N 20/00(2019.01)i

According to International Patent Classification (IPC) or to both national classification and IPC

**B.    FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, CNKI, WPI, EPODOC: 模型, 更新, 预测, 分类, 训练, 学习, 样本, 数据, 私密, 权重, 加权, 标签, 标注, 梯度, learning, training, adjust, update, model, weight, privacy, gradient, label

**C.    DOCUMENTS CONSIDERED TO BE RELEVANT**

| Category* | Citation of document, with indication, where appropriate, of the relevant passages | Relevant to claim No. |
|---|---|---|
| X | CN 107992906 A (LENOVO (BEIJING) LIMITED) 04 May 2018 (2018-05-04) description, paragraphs [0076]-[0216] | 1-37 |
| A | CN 106250988 A (WUHAN UNIVERSITY OF TECHNOLOGY) 21 December 2016 (2016-12-21) entire document | 1-37 |
| A | CN 110139325 A (HUAWEI TECHNOLOGIES CO., LTD.) 16 August 2019 (2019-08-16) entire document | 1-37 |
| A | CN 107330516 A (TENCENT TECHNOLOGY SHENZHEN CO., LTD.) 07 November 2017 (2017-11-07) entire document | 1-37 |
| A | CN 106909529 A (ALIBABA GROUP HOLDING LIMITED) 30 June 2017 (2017-06-30) entire document | 1-37 |
| A | US 2014279753 A1 (DSTILLERY, INC.) 18 September 2014 (2014-09-18) entire document | 1-37 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 December 2020** | **11 January 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/119859**

| Patent document cited in search report | | | Publication date (day/month/year) | Patent family member(s) | | | Publication date (day/month/year) |
|---|---|---|---|---|---|---|---|
| CN | 107992906 | A | 04 May 2018 | None | | | |
| CN | 106250988 | A | 21 December 2016 | None | | | |
| CN | 110139325 | A | 16 August 2019 | WO | 2019154075 | A1 | 15 August 2019 |
| | | | | IN202017034512 | | A | 25 September 2020 |
| | | | | EP3739929 | | A1 | 18 November 2020 |
| | | | | US | 20200366557 | A1 | 19 November 2020 |
| CN | 107330516 | A | 07 November 2017 | None | | | |
| CN | 106909529 | A | 30 June 2017 | WO | 2017107788 | A1 | 29 June 2017 |
| | | | | HK1237930 | | A0 | 20 April 2018 |
| US | 2014279753 | A1 | 18 September 2014 | US | 2015269495 | A1 | 24 September 2015 |

Form PCT/ISA/210 (patent family annex) (January 2015)

**EP 4 050 528 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911209129